(19) Europäisches Patentamt
European Patent Office
Office européen des brevets

(11) EP 1 915 408 B1

(12) **FASCICULE DE BREVET EUROPEEN**

(45) Date de publication et mention de la délivrance du brevet:
**02.10.2013 Bulletin 2013/40**

(21) Numéro de dépôt: **06794246.6**

(22) Date de dépôt: **31.07.2006**

(51) Int Cl.:
***C08F 297/04*** (2006.01) ***C08L 53/02*** (2006.01)
***B60C 1/00*** (2006.01) ***C08K 3/00*** (2006.01)
***C08F 287/00*** (2006.01) ***C08L 51/00*** (2006.01)

(86) Numéro de dépôt international:
**PCT/FR2006/001852**

(87) Numéro de publication internationale:
**WO 2007/014998 (08.02.2007 Gazette 2007/06)**

(54) **COMPOSITION DE CAOUTCHOUC COMPORTANT DES POLYMERES BLOCS BRANCHES**
KAUTSCHUKZUSAMMENSETZUNG ENTHALTEND ZWEIGBLOCKPOLYMERE
RUBBER COMPOSITION CONTAINING BRANCHED BLOCK POLYMERS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **01.08.2005 FR 0508207**

(43) Date de publication de la demande:
**30.04.2008 Bulletin 2008/18**

(73) Titulaires:
- **COMPAGNIE GENERALE DES ETABLISSEMENTS MICHELIN**
  **63000 Clermont-Ferrand (FR)**
  Etats contractants désignés:
  **AT BE BG CH CY CZ DE DK EE ES FI FR GB GR HU IE IS IT LI LT LU LV MC NL PL PT RO**
- **Michelin Recherche et Technique S.A.**
  **1763 Granges-Paccot (CH)**

(72) Inventeurs:
- **GANDON-PAIN, Sylvie**
  **F-63100 Clermont-Ferrand (FR)**
- **HUT, Alain**
  **F-63670 Le Cendre (FR)**

(74) Mandataire: **Le Cam, Véronique Marie Christine**
**M.F.P. Michelin,**
**SGD/LG/PI,**
**F35,**
**Ladoux**
**63040 Clermont-Ferrand-Cedex 9 (FR)**

(56) Documents cités:
**EP-A- 0 709 235** **EP-A- 1 018 521**
**EP-A- 1 380 604** **WO-A-02/16490**
**FR-A- 2 854 635** **FR-A- 2 854 636**
**US-A- 4 996 266** **US-A- 5 717 035**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention se rapporte à des polymères blocs branchés, aux compositions de caoutchouc les contenant, utilisables notamment pour la fabrication de pneumatiques ou de produits semi-finis pour pneumatiques. Elle concerne également des procédés de préparation desdits polymères et compositions.

L'amélioration de l'adhérence ou du confort sont devenues des priorités importantes pour un grand nombre de gammes pneumatiques. Par conséquent, il est souhaitable de produire des mélanges possédant de bonnes propriétés mécaniques et une hystérèse augmentée dans une certaine plage de température afin de pouvoir les mettre en oeuvre pour la fabrication de produits semi-finis entrant dans la composition d'enveloppes de pneumatiques, tels que par exemple des sous-couches, des flancs, des bandes de roulement et d'obtenir des pneumatiques possédant une adhérence ou un confort amélioré.

Il est connu que le degré de ramification (branching) peut influencer certaines propriétés des polymères. Les polymères branchés peuvent être préparés par polymérisation de type radicalaire, cationique, Ziegler-Natta, métallocène ou anionique. Les polymères branchés peuvent présenter diverses structures en fonction des conditions réactionnelles mises en service.

Ainsi, il est connu d'après les publications de KNAUSS et al., Polym. Prep. ACS. Div. Poly. Chem. 38 (1), pages 68- 69 (1997), Polym. Prep. ACS. Div. Poly, Poly Chem. 41 (2) pages 1397- 1398 (2000), J. Poly. Sci. Polym. Chem. 38, pages 4289- 4298 (2000), J. Poly. Sci. Polym. Chem. 38, pages 3547- 3555 (2001), Macromolécules, 35, pages 2055- 2062 (2002), de faire réagir un polymère anionique vivant, en l'occurrence le polystyyllithium, sur un agent de couplage pour former un macromonomère in- situ qui réagit à son tour sur les chaînes vivantes présentes. Les chaînes vivantes alors formées réagissent avec l'agent de couplage nouvellement introduit et ce jusqu'à consommation totale de l'agent de couplage. La réaction avec un agent électrophile difonctionnel ou tétrafonctionnel conduit à des polymères fortement branchés « pom- pom » ou « pom- star » dont les bras eux- mêmes peuvent être branchés ou reliés à des hybrides dendritique- linéaires lorsque l'agent de couplage est ajouté lentement.

Le document US-B-4.996.266 divulgue la synthèse de copolymères branchés dont les bras (ou greffons) sont disposés le long de la chaîne principale, soit aléatoirement, soit à des endroits prédéterminés.

Ces copolymères sont obtenus par la synthèse d'un élastomère vivant obtenu par réaction d'un initiateur lithien avec un monomère polymérisable et un agent dit de condensation organo-métallique portant une fonction vinylique ; l'initiateur lithien est utilisé à un rapport molaire sous-stoechiométrique par rapport à l'agent de condensation, puis réaction avec un agent de couplage multifonctionnel.

Ces copolymères branchés, utilisables comme adhésifs, possèdent une structure qui se rapproche d'une structure aléatoire et dendritique car il y a simultanément formation du macromonomère et polymérisation du monomère polymérisable.

Le document WO 02/16.490 A2 décrit un polymère branché ayant une structure en peigne avec un nombre important de bras latéraux conférant des propriétés d'amortissement. Ce document décrit également l'utilisation de ce polymère branché de structure en peigne dans des bandes de roulement de pneumatiques.

Or, les Demanderesses ont découvert lors de leurs recherches qu'une composition de caoutchouc spécifique, à base d'un polymère diénique branché de structure spécifique permet d'obtenir une augmentation significative de l'hystérèse dans une certaine gamme de températures par rapport aux mélanges noir habituels. Les bandes de roulement de pneumatiques et les pneumatiques obtenus à partir de ces compositions de caoutchouc présentent des performances d'adhérence et de confort améliorées.

En conséquence, un premier objet de l'invention concerne un polymère diénique branché qui correspond à un élastomère bloc comprenant au moins deux chaînes polymériques linéaires principales diéniques (appelées branches), et préférentiellement à 2 branches, reliées entre elles par un groupe présentant un hétéroatome, tel que notamment le silicium, le germanium, l'étain, le plomb, le phosphore ou par un radical issu de tout agent de couplage électrophile au moins difonctionnel non polymérisable tel qu'un ester, multiester, orthoester, diisocyanate, etc. et présentant à chacune des autres extrémités au moins deux chaînes polymériques linéaires diéniques (encore appelés greffons).

L'invention concerne également un polymère diénique linéaire branché qui correspond à un élastomère bloc comprenant au moins deux chaînes polymériques linéaires diéniques (greffons) placées toutes à l'une des extrémités d'une chaîne polymérique linéaire principale diénique, sachant que l'autre extrémité porte un groupe fonctionnel, avantageusement une fonction du type acide carboxylique, alcool, amine, silanol, alcoxysilane, organostannyle, ou un proton.

L'extrémité terminée par un proton est obtenue par désactivation de la chaîne polymérique principale propageante par addition d'un donneur de proton acide, tel que par exemple le méthanol.

L'invention a également pour objet un procédé de préparation de tels élastomères.

L'invention concerne également une composition de caoutchouc, utilisable pour la fabrication de pneumatiques, à base d'au moins : un élastomère selon l'invention et une charge renforçante.

L'invention a également pour objet l'utilisation d'une composition conforme à l'invention pour la fabrication d'articles finis ou produits semi-finis comportant une composition de caoutchouc conforme à l'invention, ces articles ou

produits étant destinés à tout système de liaison au sol des véhicules automobiles, tels que pneumatiques, appuis internes de sécurité pour pneumatiques, roues, ressorts en caoutchouc, articulations élastomériques, autres éléments de suspension et anti-vibratoire.

L'invention a tout particulièrement pour objet l'utilisation d'une composition conforme à l'invention pour la fabrication de pneumatiques ou de produits semi-finis en caoutchouc destinés à ces pneumatiques, ces articles semi-finis étant notamment choisis dans le groupe constitué par les bandes de roulement, les sous-couches destinées par exemple à être placées sous ces bandes de roulement, les nappes d'armature de sommet, les flancs, les nappes d'armature de carcasse, les talons et les protecteurs.

L'invention a également pour objet ces articles finis et produits semi-finis eux-mêmes, en particulier les pneumatiques et produits semi-finis pour pneumatiques, lorsqu'ils comportent une composition élastomérique conforme à l'invention. Les pneumatiques conformes à l'invention peuvent être notamment destinés à des véhicules tourisme comme à des véhicules industriels choisis parmi camionnettes, "Poids-lourd" - i.e., métro, bus, engins de transport routier (camions, tracteurs, remorques), véhicules hors-la-route - , engins agricoles ou de génie civil, avions, autres véhicules de transport ou de manutention.

L'invention ainsi que ses avantages seront aisément compris à la lumière de la description et des exemples de réalisation, ainsi que de la figure, qui suivent.

**I. CONDITIONS DE REALISATION DE L'INVENTION**

Dans la présente description, sauf indication expresse différente, tous les pourcentages (%) indiqués sont des % en masse.

I-1. Elastomères

Un des objets de l'invention concerne donc des élastomères blocs comprenant au moins deux chaînes polymériques linéaires principales diéniques, et préférentiellement ceux comprenant uniquement deux chaînes polymériques linéaires principales, les chaînes polymériques linéaires principales étant reliées entre elles (à l'une de leurs extrémités) par un groupe présentant un hétéroatome issu d'un agent de couplage, tel que notamment le silicium, le germanium, l'étain, le plomb, le phosphore ou par un radical issu de tout agent de couplage électrophile au moins difonctionnel, tel que par exemple ester, multiester, orthoester, diisocyanate, etc. et présentant à chacune des autres extrémités au moins deux chaînes polymériques linéaires diéniques.

Selon une forme d'exécution préférentielle de l'invention, les élastomères blocs selon l'invention comportant 2 branches peuvent être représentés de la manière suivante :

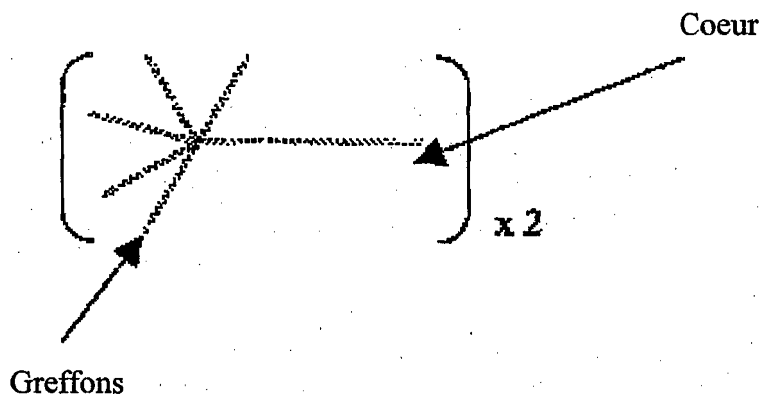


Ainsi, selon cette représentation, la chaîne principale (représentée horizontalement) est appelée coeur de l'élastomère et est un polymère linéaire diénique et les bouts de chaînes, répartis en moyenne en nombre égal de part et d'autre du coeur, sont appelés greffons et sont des polymères linéaires diéniques.

Cette représentation est bien entendu une représentation en moyenne car le polymère diénique branché peut être dissymétrique.

Dans ce schéma, les greffons sont au nombre moyen de 10 (2x5), mais leur nombre peut varier en fonction des conditions mises en oeuvre lors du procédé de préparation desdits élastomères, et notamment en fonction du nombre de branches qui constituent le coeur de l'élastomère.

Ainsi, selon un aspect particulier de l'invention, l'élastomère bloc comprend en moyenne de 2 à 25, avantageusement de 3 à 10, chaînes polymériques diéniques linéaires placées à l'une des extrémités de chaque chaîne

polymérique principale diénique ou branche, soit pour 2 branches, jusqu'à 2 x 25 greffons.

Un autre objet de l'invention concerne des élastomères blocs comprenant une chaîne polymérique linéaire principale diénique et au moins deux greffons, c'est-à-dire au moins deux chaînes polymériques linéaires diéniques placées toutes à l'une des extrémités de ladite chaîne polymérique linéaire principale diénique, l'autre extrémité portant soit un proton, soit une fonction Z de type électrophile, avantageusement du type acide carboxylique, alcool, amine, silanol, alcoxysilane, organostannyle, etc..

Selon une forme d'exécution préférentielle de l'invention, les élastomères blocs ainsi définis selon l'invention comportant une fonction Z et 5 greffons peuvent être représentés de la manière suivante :

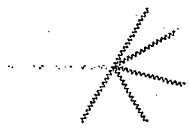

Les élastomères blocs comprennent alors en moyenne de 2 à 25, avantageusement de 3 à 10, chaînes polymériques diéniques linéaires (greffons) toutes placées à l'une des extrémités de chaque chaîne polymérique principale linéaire diénique.

Les chaînes polymériques principales et les chaînes polymériques des greffons comprennent des polymères linéaires diéniques.

Les polymères linéaires diéniques des greffons sont généralement des homopolymères ou copolymères de monomères diènes (monomères porteurs de deux doubles liaisons carbone-carbone, conjuguées ou non).

Par polymère diénique "essentiellement insaturé", on entend ici un polymère diénique issu au moins en partie de monomères diènes conjugués, ayant un taux de motifs ou unités d'origine diénique (diènes conjugués) qui est supérieur à 15% (% en moles). C'est ainsi, par exemple, que des polymères diéniques tels que les caoutchoucs butyle ou les copolymères de diènes et d'alpha-oléfines type EPDM n'entrent pas dans cette définition et peuvent être qualifiés au contraire de polymères diéniques "essentiellement saturés" (taux de motifs d'origine diénique faible ou très faible, toujours inférieur à 15%). Dans la catégorie des polymères diéniques "essentiellement insaturés", on entend en particulier par polymère diénique "fortement insaturé" un polymère diénique ayant un taux de motifs d'origine diénique (diènes conjugués) qui est supérieur à 50%.

Ces définitions générales étant données, les polymères linéaires diéniques des greffons et du coeur de l'élastomère sont de préférence essentiellement insaturés, en particulier avec :

(a) tout homopolymère obtenu par polymérisation d'un monomère diène conjugué ayant de 4 à 12 atomes de carbone;

(b) tout copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment le butadiène- 1, 3, le 2- méthyl- 1, 3- butadiène, les 2, 3-di- alkyl ($C_1$- $C_5$)- 1, 3- butadiènes tels que par exemple le 2, 3- diméthyl- 1, 3- butadiène, le 2, 3- diéthyl- 1, 3- butadiène, le 2- méthyl- 3- éthyl- 1, 3- butadiène, le 2- méthyl- 3- isopropyl- 1, 3- butadiène, un aryl- 1, 3- butadiène, le 1, 3-pentadiène, le 2, 4- hexadiène. A titre de composés vinyle- aromatiques conviennent par exemple le styrène, l'ortho-, méta-, para- méthylstyrène, le mélange commercial "vinyle- toluène", le para- tertiobutylstyrène, les méthoxystyrènes, les chlorostyrènes, le vinylmésitylène, et le vinylnaphtalène.

Les copolymères peuvent contenir entre 99% et 20% en poids d'unités diéniques et entre 1% et 80% en poids d'unités vinyle-aromatiques. Les copolymères peuvent avoir toute microstructure qui est fonction des conditions de polymérisation utilisées, notamment de la présence ou non d'un agent modifiant et/ou randomisant et des quantités d'agênt modifiant et/ou randomisant employées. Les polymères peuvent être par exemple à blocs, statistiques, séquencés, microséquencés, et être préparés en dispersion ou en solution. Ils peuvent être éventuellement couplés ou fonctionnalisés avec un agent de couplage ou de fonctionnalisation.

A titre préférentiel conviennent les polybutadiènes et en particulier ceux ayant une teneur en unités -1,2 comprise entre 4% et 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 70%, une teneur en liaisons trans-1,4 comprise entre 20% et 80%, les copolymères de butadiène-isoprène et notamment ceux ayant une teneur en isoprène comprise entre 5% et 90% en poids, les copolymères isoprène-styrène et notamment ceux ayant une teneur en styrène comprise entre 5% et 50% en poids. Dans le cas des copolymères de butadiène-styrène-isoprène conviennent notamment ceux ayant une teneur en styrène comprise entre 5% et 50% en poids et plus particulièrement comprise entre 10% et 40%, une teneur en

isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre 0°C et -70°C.

En résumé, de manière particulièrement préférentielle, les polymères diéniques des greffons de l'élastomère conforme à l'invention sont choisis dans le groupe des élastomères linéaires diéniques essentiellement, voire fortement, insaturés constitué par les polybutadiènes (BR), les polyisoprènes de synthèse (IR), les copolymères de butadiène, les copolymères d'isoprène et les mélanges de ces polymères.

De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Chaque chaîne polymérique principale comprend également des polymères linéaires diéniques. Ainsi, les polymères diéniques présents dans une chaîne principale peuvent être définis de la même manière que ceux présents dans les greffons. Ils peuvent être de nature chimique différente ou identique de ceux présents dans les greffons. Avantageusement, les polymères diéniques d'une chaîne principale sont fortement insaturés (tel que défini ci-dessus). Ils sont en particulier choisis parmi les polybutadiènes (BR), les polyisoprènes de synthèse (IR), les copolymères de butadiène, les copolymères d'isoprène et les mélanges de ces polymères.

Lorsque le coeur de l'élastomère bloc est constitué de 2 branches ou plus, chaque chaîne polymérique linéaire principale est reliée à une autre branche par un groupe présentant un hétéroatome, tel que notamment le silicium, le germanium, J'étain, le plomb, le phosphore ou par un radical issu d'un agent de couplage électrophile tel que notamment un ester, multiester, orthoester, ou diisocyanate. Le coeur de l'élastomère peut comprendre plusieurs branches selon la nature de l'agent de couplage électrophile, avantageusement de 2 à 6 branches.

Le groupe présentant un hétéroatome peut varier selon les conditions de mise en oeuvre du procédé de préparation de l'élastomère selon l'invention. De manière avantageuse, l'hétéroatome est le silicium. Le groupe organosilicié peut être de formule (I) suivante : Si $(R_1)_{4-n}$, dans lequel n est un entier 2, 3, ou 4 (avantageusement 2), $R_1$, identique ou différent, est un radical hydrocarboné de $C_1$- $C_{12}$, de préférence un radical alkyle saturé, linéaire, cyclique ou ramifié, de $C_1$- $C_6$ , avantageusement le radical méthyle ou éthyle, cycloalkyle en $C_5$- $C_{18}$, aryle en $C_6$- $C_{18}$, en particulier un radical phényle, alkoxyle en $C_1$- $C_{12}$, cycloalkoxyle en $C_5$- $C_{18}$, aryloxy en $C_6$- $C_{18}$. Le groupe organosilicié peut également être de formule (II) suivante : $(R_1)_{3-n'}$Si- R'- Si $(R_1)_{3-m}$, dans lequel R' est un radical alkylène de $C_1$- $C_{12}$ linéaire ou cyclique, de préférence $C_1$- $C_6$, avantageusement le radical méthylène, un radical cycloalkylène en $C_5$- $C_{18}$, un radical arylène en $C_6$- $C_{18}$, en particulier un radical phénylène, n'et m, identiques ou différents, représentent un entier 1, 2 ou 3 et $R_1$ correspond à la signification donnée ci- dessus.

Dans le cas d'un élastomère branché fonctionnalisé, les agents de fonctionnalisation peuvent être tous les agents de fonctionnalisation connus et classiquement utilisés en polymérisation anionique et avantageusement la 4, 4'-bis (diéthylamino) benzophénone, l'oxyde d'éthylène, l'hexaméthylcyclotrisiloxane, le $CO_2$, les alcoxysilanes, ou le chlorure de tributylétain.

La longueur d'une chaîne polymérique linéaire principale est avantageusement supérieure à la longueur d'un greffon. Selon un mode préféré, la longueur de chaque greffon peut être de 1000 à 4 fois, avantageusement de 100 à 10 fois, plus petite que celle ou de l'une quelconque des branches constituant les chaînes principales.

La longueur de chaque chaîne linéaire principale est décrite en termes de longueur moyenne. La longueur moyenne se réfère au poids moléculaire en nombre des chaînes, avant qu'elles ne soient reliées entre elles pour former l'élastomère selon l'invention. Sauf indication contraire, les poids moléculaires en nombre sont donnés par la relation Mn = charge de monomère en masse x conversion / nombre de moles de métal alcalin actif théorique, sachant que le nombre de moles de métal alcalin actif théorique est égal au nombre de moles de métal alcalin total introduit moins le nombre de moles métal alcalin utilisé pour neutraliser les impuretés.

La longueur de chaque chaîne ou branche principale peut varier dans une large mesure. Pour donner un ordre de grandeur, chaque partie polymérique linéaire de chaque branche présente préférentiellement un poids moléculaire en nombre compris entre 2000 et 500000, avantageusement compris entre 50000 et 300000 (selon le schéma ci-dessus, la chaîne principale présente donc deux parties polymériques). La longueur de chaque chaîne linéaire des greffons présents aux extrémités de la chaîne principale présente préférentiellement un poids moléculaire en nombre compris entre 500 et 70000, avantageusement compris entre 2500 et 25000.

I-2. Préparation des élastomères

Les élastomères conformes à l'invention sont avantageusement obtenus par le procédé décrit ci-dessous.

Ainsi, la présente invention a également pour objet un procédé de préparation des élastomères selon l'invention,

qui comprend au moins les étapes suivantes:

(1) synthèse d'un macromonomère par réaction d'au moins un polymère diénique linéaire vivant présentant un carbanion avec un excès stoechiométrique par rapport à la quantité de métal alcalin ou alcalino-terreux actif théorique d'un composé présentant un groupement polymérisable par voie anionique et un groupement susceptible de déplacement nucléophile par le carbanion dudit polymère vivant,

(2) réaction de la solution de macromonomère formée à l'étape (1) avec un initiateur nucléophile, pour obtenir un polymacromonomère vivant,

(3) réaction du polymacromonomère vivant obtenu à l'étape (2) avec au moins un monomère diène conjugué ayant de 4 à 12 atomes de carbone, tel que le butadiène, afin d'obtenir un dibloc vivant polymacromonomère-polymère linéaire diénique,

(4) réaction du dibloc vivant obtenu à l'étape (3) soit avec un réactif de couplage électrophile au moins difonctionnel non polymérisable, soit avec un réactif électrophile, précurseur de groupes fonctionnels, tels que notamment alcool, acide carboxylique, amine, silanol, alcoxysilane, ou organostannyle, soit avec un composé donneur de proton acide.

Le polymère vivant mis en oeuvre à l'étape (1) est un polymère de nature diénique qui va correspondre à un greffon tel que défini ci-dessus. Ainsi, il peut notamment être choisi parmi les polybutadiènes (BR), les polyisoprènes de synthèse (IR), les copolymères de butadiène, les copolymères d'isoprène, les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels (co)polymères.

Ce polymère présente à l'une de ses extrémités un carbanion, et son contre-ion est issu de la famille des métaux alcalins ou alcalino-terreux, en particulier du lithium.

Les procédés de préparation des polymères utilisés à l'étape (1) sont largement décrits dans la littérature (voir « Principles of Polymerization » 3e édition, G. Odian, John Wiley & Sons, 1991) et sont donc à la portée de l'homme du métier.

Le composé présentant à la fois un groupement polymérisable par voie anionique et un groupement susceptible de déplacement nucléophile par le carbanion dudit polymère vivant est de préférence un composé présentant une fonction styryle d'une part et un atome d'halogène, d'autre part, tel que notamment les chlore, brome, iode et fluor. On peut citer par exemple le chlorométhylstyrène (VBC), le chlorodiméthylsilylstyrène, le chlorodiméthylsilylméthylstyrène ou le bromométhylstyrène. Ces produits sont disponibles commercialement ou synthétisables par des procédés décrits dans la littérature (cf. Asami et al., Polym. Prepr. ACS, Div. Polym. Chem. 29(2), 19-20 (1998)).

Le composé présentant à la fois un groupement polymérisable par voie anionique et un groupement susceptible de déplacement nucléophile par le carbanion dudit polymère vivant est utilisé en excès stoechiométrique par rapport à la quantité de métal alcalin ou alcalino-terreux actif théorique, avantageusement de Li actif, c'est-à-dire en une quantité strictement supérieure à 1,0 et inférieure à 2 équivalents molaires, préférentiellement de 1,05 à 1,5 équivalents molaires; afin d'obtenir une structure linéaire du macromonomère.

La température de réaction de l'étape (1) est généralement comprise entre -20°C et 70°C, elle est typiquement de -10°C à 5°C pour modérer la réactivité du carbanion et orienter la réaction sur le déplacement nucléophile. La température est un moyen connu pour modérer la réactivité, mais tout autre moyen connu de l'homme de l'art peut être utilisé, tel que la réaction préalable du bout de chaîne vivant avec le diphényléthylène.

L'étape (1) peut être réalisée dans un solvant polaire ou non-polaire, tel que le tetrahydrofurane (THF), ou un composé hydrocarboné, tel que les hexanes acycliques ou cycliques, heptanes, octanes, pentanes, leurs dérivés alkylés (par exemple le méthylcyclohexane), ou encore un solvant aromatique (par exemple le toluène) ou leurs mélanges et/ou en présence de coordinateurs éthers, amines ou randomisants tels que des alcoolates de sodium pour la synthèse de macromonomère diénique (y compris SBR) à taux d'unités 1,2 supérieur à 10%.

Dans le cas de la synthèse de macromonomère avec un taux d'unités 1, 2 supérieur à 10% (y compris SBR) par des moyens connus de l'homme de l'art, il est avantageux de modérer davantage la réactivité du carbanion alors exacerbée par la présence des composés polaires pour minimiser la réaction parasite qui est la réaction d'addition nucléophile sur la double liaison styryle et par suite pour maintenir une sélectivité de réaction suffisante. Les moyens pour y parvenir sont en particulier l'introduction de l'adduit de formule LiAl (R) 3 (R'), décrit dans le brevet US 6506862 B2, où R et R' représentent chacun indépendamment un groupe alkyle, cycloalkyle ou aryle, ou bien l'introduction de diphényléthylène avant réaction avec le composé présentant à la fois un groupement polymérisable par voie anionique et un groupement susceptible de déplacement nucléophile par le carbanion du polymère vivant, avantageusement du type halogénoalkylstyrène.

Ainsi, dans le cas d'une réaction à l'étape (1) de polybutadiène avec du VBC, le produit (ou encore appelé

macromonomère) qui peut être obtenu à l'issue de l'étape (1) correspond à un styrène substitué par une chaîne polymérique polybutadiène linéaire.

L'initiateur nucléophile utilisé à l'étape (2) peut être tout initiateur utilisé couramment dans les réactions de polymérisation anionique. Il peut être en particulier un initiateur de formule générale (III) : R-M, dans laquelle M représente un métal choisi parmi un métal alcalin et un alcalino-terreux et R représente un radical alkyle, linéaire ou ramifiée, contenant de 2 à 6 atomes de carbone ou un radical aryle de 6 à 12 atomes de carbone.

Des initiateurs nucléophiles peuvent notamment être choisis parmi les sec- butyllithium, n- butyllithium, t-butyllithium, napthalènesodium, 1, 4- disodio- 1, 1, 4, 4- tetraphénylbutane, diphénylméthylpotassium, diphénylméthylsodium, 1'- méthylstyryllithium et 1, 1- diphényl- 3- méthylpentyllithium ou encore des amorceurs fonctionnels, tels que ceux porteurs d'une fonction amine, étain, imine, alcool éventuellement protégée. De préférence, l'initiateur est le sec-butyllithium.

La polymérisation anionique est généralement réalisée dans un solvant polaire ou non-polaire, tel que le tetrahydrofurane (THF), ou un composé hydrocarboné, tels que les hexanes acycliques ou cycliques, heptanes, octanes, pentanes, leurs dérivés alkylés (e.g. le méthylcyclohexane), ou un solvant aromatique ou leurs mélanges. Lorsque le macromonomère formé à l'étape (1) ou lorsque le coeur de l'élastomère branché est un copolymère d'un diène conjugué et d'un composé vinyle aromatique, afin de promouvoir le caractère aléatoire de la copolymérisation et/ou de contrôler la teneur en espèces vinyliques, un coordinateur polaire (ou agent modifiant et/ou randomisant) peut être ajouté au mélange réactionnel. La quantité de coordinateur polaire employée peut varier de 0 à environ 90 ou plus d'équivalents par équivalent molaire de lithium. La quantité de coordinateur polaire dépend de la quantité de vinyl désirée, du taux de styrène employé, de la température de polymérisation, ainsi que de la nature du coordinateur utilisé. De tels coordinateurs incluent, par exemple, les éthers ou amines fournissant la microstructure envisagée.

La réaction de la solution de macromonomère formée à l'étape (1) avec l'initiateur nucléophile pour polymériser le macromonomère est avantageusement effectuée dans un milieu de polarité minimum relativement élevée pour obtenir un indice de polydispersité Ip étroit de l'élastomère conforme à l'invention. La polarité du milieu est réglée de manière connue en soi en fonction de l'agent polaire utilisé.

L'invention a également pour objet le polymacromonomère diénique susceptible d'être obtenu par réaction du polymacromonomère vivant, obtenu au terme de l'étape 2, soit avec un réactif électrophile précurseur de groupes fonctionnels, tels que notamment alcool, acide carboxylique, amine, silanol, alcoxysilane ou organostannyle, soit avec un composé donneur de proton acide.

Ainsi, la présente invention a également pour objet un procédé de préparation de polymacromonomères diéniques, comprenant les étapes (1) et (2) telles que définies ci- dessus, de préférence suivi de la réaction du polymacromonomère vivant obtenu au terme de l'étape 2, soit avec un réactif électrophile précurseur de groupes fonctionnels, tels que notamment alcool, acide carboxylique, amine, silanol, alcoxysilane ou organostannyle, soit avec un composé donneur de proton acide. Les conditions et les composés donneurs de proton acide et réactifs électrophile précurseurs de groupes fonctionnels susceptibles d'être mis en oeuvre pour cette étape sont tels que décrits ci- après.

L'étape (3) telle qu'identifiée ci- dessus correspond en particulier à une polymérisation diénique par propagation de diènes à partir du polymacromonomère vivant de l'étape (2) . Ainsi, les conditions de cette étape correspondent plus spécifiquement aux conditions classiques mises en oeuvre lors d'une polymérisation anionique. Cette étape permet en particulier de préparer la partie polymérique de la chaîne principale linéaire de l'élastomère conforme à l'invention.

En particulier, les diènes conjugués mis en oeuvre sont notamment le butadiène- 1, 3, le 2- méthyl- 1, 3-butadiène, les 2, 3- di (alkyle en C1 à C5)- 1, 3- butadiènes tels que par exemple le 2, 3- diméthyl- 1, 3- butadiène, le 2, 3- diéthyl- 1, 3- butadiène, le 2- méthyl- 3- éthyl- 1, 3- butadiène, le 2- méthyl- 3- isopropyl- 1, 3- butadiène, un aryl-1, 3- butadiène, le 1, 3- pentadiène, le 2, 4- hexadiène.

L'ajout de composés vinyle-aromatiques peut également être envisagée pour former une chaîne de type copolymère. Ainsi, à titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le vinylnaphtalène.

Le composé ainsi obtenu à l'étape (3) peut être mis en présence d'un agent de couplage électrophile au moins difonctionnel non polymérisable, selon l'étape (4) . A titre d'agents de couplage électrophiles, conviennent avantageusement les composés organométalliques halogénés ou non, répondant aux formules suivantes (IV) : $Y (X)_n (R_1)_{4-n}$, ou (V) : $(R_1)_{3-m}X_mY$- R'- $YX_{n'} (R_1)_{3-n'}$, dans lesquelles n est un entier 2, 3 où 4 (avantageusement 2) ou n' et m, identiques ou différents, représentent un entier 1, 2 ou 3, Y est Si, Ge, Sn, Pb, X est un atome d'halogéne, tel que notamment les chlore, brome, iode et fluor, avantageusement le chlore, ou un groupe alcoxyle ou aryloxy, $R_1$, identique ou différent, est un radical hydrocarboné de $C_1$- $C_{12}$, de préférence un radical alkyle saturé, linéaire, cyclique ou ramifié, de $C_1$- $C_6$, avantageusement le radical méthyle ou éthyle ou un radical aryle en $C_6$- $C_{18}$, avantageusement le groupe phényle, R' étant un radical hydrocarboné insaturé de $C_1$- $C_{12}$, linéaire ou cyclique, de préférence un radical alkylène $C_1$- $C_6$ et avantageusement le radical méthylène, ou arylène en $C_6$- $C_{18}$ et avantageusement le radical phénylène. Peuvent également convenir les phosphites, avantageusement les composés répondant aux formules $P (OR_1)_3$ ou $P (OAr)_3$ dans

lesquelles $R_1$ correspond à la définition ci- dessus et Ar est un radical aryle en $C_6$- $C_{18}$, et les dérivés de l'étain répondant à la formule générale (VI) suivante : $(R_1)_{4-n}Sn\ (X)_n$ dans laquelle $R_1$, X et n ont la signification indiquée ci- dessus, les esters, orthoesters, multiesters, ou les diisocyanates.

A titre préférentiel, l'agent de couplage est un composé du silicium répondant à la formule $Si(X)_n\ (R_1)_{4-n}$ dans laquelle X, $R_1$ et n correspondent à la définition ci-dessus.

La quantité de l'agent de couplage électrophile au moins difonctionnel non polymérisable peut varier selon sa fonctionnalité et selon le nombre de branches souhaité. De manière pratique, elle est avantageusement comprise entre 0,1 et 0,5 équivalent molaire par rapport au composé obtenu à l'étape (3).

Selon une variante d'exécution du procédé de l'invention, le composé ainsi obtenu à l'étape (3) peut être mis en présence d'un donneur de proton acide, selon l'étape (4), et avantageusement le méthanol, ou bien d'un agent de fonctionnalisation (ou réactif électrophile) à raison d'une quantité de 1 à 10 équivalent molaire, préférentiellement de 1 à 3. A titre d'agents de fonctionnalisation, conviennent avantageusement des agents précurseurs de fonction acide carboxylique, alcool, silanol, alcoxysilane, organostannyle, ou amine.

De manière connue en soi, le procédé comprend avantageusement en outre une étape (5) mettant en contact le polymère obtenu à l'issue de l'étape (4) avec un agent anti- oxydant ou un agent donneur de proton, notamment un alcool et préférentiellement le méthanol. Cet agent diminue, voire empêche, notamment toute oxydation ou réticulation du polymère bloc branché de l'invention. L'agent peut être tout agent anti- oxydant classiquement utilisé dans le domaine des polymères, en particulier on peut citer le 2, 2'- méthylène bis (4- méthyl- 6- tertiobutylphénol) et le N- 1, 3 diméthylbutyl N- phénylparaphénylènediamine. La quantité de cet agent peut varier dans une large mesure, elle est généralement comprise entre 0.1 et 5 pour cent parties d'élastomère par rapport au composé obtenu à l'étape (4) .

La température des étapes (2), (3) et (4) peut généralement être comprise entre environ 0°C à 90°C, et de préférence entre environ 20°C et 70°C.

Tous les réacteurs, monomères, solvants et autres composés sont au préalable avantageusement barbotés à l'azote. Sauf indication contraire, les solutions sont préparées dans le méthylcyclohexane. La solution de nBuLi est avantageusement dans le cyclohexane.

L'ensemble des étapes décrites ci-dessus peut se faire de manière discontinue ou avantageusement de manière continue, en particulier sans isoler (ni purifier) les produits réactionnels obtenus après chaque étape, sauf lorsque l'on veut récupérer le polymacromonomère à l'issue de l'étape 2.

Le copolymère bloc ainsi préparé est récupéré selon les méthodes classiques, notamment par séchage à chaud et/ou pression réduite ou par stripping.

L'homme du métier peut bien entendu sélectionner les conditions de réaction convenables pour réaliser le procédé conforme à l'invention.

<u>I-3. Composition de caoutchouc</u>

L'invention concerne également une composition de caoutchouc, utilisable pour la fabrication de pneumatiques, à base d'au moins : un élastomère bloc branché selon l'invention et une charge renforçante.

Bien entendu, par l'expression composition "à base de", il faut entendre une composition comportant le mélange et/ou le produit de réaction *in situ* des différents constituants utilisés, certains de ces constituants de base étant susceptibles de, ou destinés à réagir entre eux, au moins en partie, lors des différentes phases de fabrication de la composition, en particulier au cours de sa réticulation.

La composition conforme à l'invention est par exemple utilisable comme bande de roulement pour pneumatique, qu'il s'agisse d'un pneumatique neuf ou usagé (cas d'un rechapage).

La composition conforme à l'invention est par exemple utilisable comme bande de roulement pour pneumatique de tourisme, de Poids-lourds, ou utilisée comme mélange interne au pneumatique, par exemple pour la réalisation de sous-couches, pour le calandrage d'armatures de sommet ou de carcasse.

Selon un autre mode de réalisation avantageux de l'invention, notamment lorsqu'elle est destinée à un flanc de pneumatique, la composition conforme à l'invention peut contenir au moins un élastomère diénique essentiellement saturé, en particulier au moins un copolymère EPDM, en mélange avec un ou plusieurs des élastomères selon l'invention.

Les compositions de l'invention peuvent contenir un seul élastomère selon l'invention ou un mélange de plusieurs élastomères selon l'invention, le ou les élastomères diéniques pouvant être utilisés en association avec tout type d'élastomère synthétique autre que diénique, voire avec des polymères autres que des élastomères, par exemple des polymères thermoplastiques.

On peut utiliser tout type de charge renforçante connue pour ses capacités à renforcer une composition de caoutchouc utilisable pour la fabrication de pneumatiques, par exemple une charge organique tel que du noir de carbone ou encore une charge inorganique renforçante telle que de la silice à laquelle sera alors associée un agent de couplage.

Comme noirs de carbone conviennent tous les noirs de carbone, notamment les noirs du type HAF ("High Abrasion Furnace"), ISAF ("Intermediate Super Abrasion Furnace"), SAF ("Super Abrasion Furnace"), conventionnellement utilisés dans les pneumatiques (noirs dits de grade pneumatique), par exemple dans les bandes de roulement de ces pneumatiques. Parmi ces derniers, on citera plus particulièrement les noirs de carbone renforçants des séries 100, 200 ou 300 (grades ASTM), comme par exemple les noirs N115, N134, N234, N330, N339, N347, N375.

Comme charges inorganiques renforçantes conviennent notamment des charges minérales du type siliceuse, en particulier de la silice ($SiO_2$), ou du type alumineuse, en particulier de l'alumine ($Al_2O_3$) ou des (oxyde)hydroxydes d'aluminium. La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2$/g, de préférence de 30 à 400 $m^2$/g. Les silices précipitées hautement dispersibles (dites "HD") sont préférées, en particulier lorsque l'invention est mise en oeuvre pour la fabrication de pneumatiques présentant une faible résistance au roulement ; comme exemples de silices HD, on peut citer les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber. Comme exemples d'alumines renforçantes, on peut citer les alumines "Baikalox" "A125" ou "CR125" (société Baïkowski), "APA-100RDX" (société Condea), "Aluminoxid C" (société Degussa) ou "AKP-G015". (Sumitomo Chemicals).

Pour coupler la charge inorganique renforçante à l'élastomère diénique, on utilise tout agent de couplage ou liaison connu, en particulier des organosilanes ou des polyorganosiloxanes au moins bifonctionnels. On utilisera notamment des silanes polysulfurés, dits "symétriques" ou "asymétriques" selon leur structure particulière, tels que décrits par exemple dans les brevets ou demandes de brevet FR 2 149 339, FR 2 206 330, US 3 842 111, US 3 873 489, US 3 978 103, US 3 997 581, US 4 002 594, US 4 072 701, US 4 129 585, US 5 580 919, US 5 583 245, US 5 650 457, US 5 663 358, US 5 663 395, US 5 663 396, US 5 674 932, US 5 675 014, US 5 684 171, US 5 684 172, US 5 696 197, US 5 708 053, US 5 892 085, EP 1 043 357, WO 01/49782, WO 02/22728, WO 02/31041, WO 02/083782.

De manière préférentielle, le taux de charge renforçante totale (noir de carbone et/ou charge inorganique renforçante) est compris entre 20 et 200 pce, plus préférentiellement entre 30 et 150 pce (parties en poids pour cent parties d'élastomère), l'optimum étant différent selon les applications visées : le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que Poids lourd.

A la lumière de la présente description, l'homme du métier saura ajuster cette teneur, dans les domaines indiqués ci-dessus, en fonction de l'application visée, par exemple de la partie du pneumatique à laquelle est destinée la composition de caoutchouc de l'invention, de la nature de l'élastomère diénique ou encore de la quantité de charge renforçante utilisée.

La composition de l'invention peut comprendre en outre un système de vulcanisation, en particulier du soufre, d'autre(s) agent(s) donneur(s) de soufre usuel(s) ou leur mélange.

Bien entendu, les compositions de caoutchouc conformes à l'invention comportent également tout ou partie des additifs habituellement utilisés dans les compositions de caoutchouc comportant un élastomère diénique et destinées à la fabrication de pneumatiques ou de produits semi-finis pour pneumatiques, comme par exemple des plastifiants, des agents de protection tels que cires anti-ozone, anti-ozonants chimiques, anti-oxydants, agents anti-fatigue, des promoteurs d'adhésion, des résines renforçantes telles que décrites par exemple dans WO02/10269, des peroxydes et/ou bismaléimides, divers accélérateurs secondaires ou activateurs de vulcanisation connus tels que oxyde de zinc, acide stéarique, dérivés guanidiques (en particulier diphénylguanidine), etc. A la charge renforçante, notamment lorsqu'il s'agit d'une charge inorganique renforçante, peut être également associée, si besoin est, une charge inorganique conventionnelle peu ou non renforçante, par exemple des particules d'argiles, de bentonite, talc, craie, ou kaolin.

Dans le cas où la charge renforçante utilisée est une charge inorganique, on pourra utiliser avantageusement des agents de recouvrement de la charge inorganique renforçante, ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des alkylalkoxysilanes, notamment des alkyltriéthoxysilanes, comme par exemple le 1- octyl- triéthoxysilane commercialisé par la société Degussa- Hüls sous la dénomination Dynasylan Octeo ou le 1- hexa- décyl- triéthoxysilane commercialisé par la société Degussa- Hüls sous la dénomination Si216, des polyols, des polyéthers (par exemple des polyéthylèneglycols), des amines primaires, secondaires ou tertiaires (par exemple des trialcanol- amines), des polyorganosiloxanes hydroxylés ou hydrolysables, par exemple des $\alpha$, $\omega$- dihydroxy-polyorganosiloxanes (notamment des $\alpha$, $\omega$- dihydroxy- polydiméthylsiloxanes) .

<u>1-4. Préparation des compositions de caoutchouc</u>

Les compositions sont fabriquées dans des mélangeurs appropriés, en utilisant deux phases de préparation successives bien connues de l'homme du métier : une première phase de travail ou malaxage thermo- mécanique (parfois qualifiée de phase "non- productive") à haute température, jusqu'à une température maximale (notée $T_{max}$)

comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le système de réticulation ou vulcanisation. De telles phases ont été décrites par exemple dans les demandes EP- A- 0501227, EP- A- 0735088, EP- A- 0810258, EP- A-0881252, WO99/28376, WO00/05300, WO00/05301 ou WO02/10269.

Le procédé de fabrication des compositions selon l'invention comporte les étapes suivantes:

- incorporer à un élastomère diénique, au cours d'une première étape dite "non-productive", au moins une charge renforçante, en malaxant thermomécaniquement le tout, en une ou plusieurs fois, jusqu'à atteindre une température maximale comprise entre 110°C et 190°C;
- refroidir l'ensemble à une température inférieure à 100°C;
- incorporer ensuite, au cours d'une seconde étape dite "productive", le système de réticulation ou de vulcanisation;
- malaxer le tout jusqu'à une température maximale inférieure à 120°C,
- extruder ou calandrer la composition de caoutchouc ainsi obtenue, sous la forme désirée, telle qu'une bande de roulement de pneumatique par exemple.

A titre d'exemple, la première phase (non- productive) est conduite en une seule étape thermomécanique au cours de laquelle on introduit, dans un mélangeur approprié tel qu'un mélangeur interne usuel, tous les constituants de base nécessaires, les éventuels agents de recouvrement ou de mise en oeuvre complémentaires et autres additifs divers, à l'exception du système de vulcanisation. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion, dans la matrice élastomérique, de la charge renforçante et autres ingrédients. La durée totale du malaxage, dans cette phase non- productive, est de préférence comprise entre 2 et 10 minutes.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée, par exemple sous la forme d'une feuille, d'une plaque ou encore extrudée, par exemple pour former un profilé de caoutchouc utilisé pour la fabrication de semi-finis tels que des bandes de roulement, des nappes sommet, des flancs, des nappes carcasse, des talons, des protecteurs.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté, de la cinétique de vulcanisation de la composition considérée ou par exemple de la taille du pneumatique.

Le système de vulcanisation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

Il va de soi que l'invention concerne les compositions de caoutchouc précédemment décrites tant à l'état dit "cru" (i.e., avant cuisson) qu'à l'état dit "cuit" ou vulcanisé (i.e., après réticulation ou vulcanisation).

Les compositions conformes à l'invention peuvent être utilisées seules ou en coupage (i.e., en mélange) avec toute autre composition de caoutchouc utilisable par exemple pour la fabrication de pneumatiques.

L'invention est illustrée dans la section suivante par des exemples et la figure 1 qui doivent être considérés comme illustratifs et non limitatifs.

FIGURE 1 : Evolution de Tan(δ) en fonction de la température pour les compositions B et C à base d'élastomères selon l'invention.

**II. <u>MESURES ET TESTS UTILISES</u>**

Les élastomères selon l'invention sont caractérisés avant cuisson comme indiqué ci-après:

II-A -Détermination des masses moléculaires en nombre Mn

Sauf indication contraire, les masses moléculaires en nombre sont donnés par la relation Mn = charge de

monomère en masse x conversion/ nombre de moles de métal alcalin ou alcalino-terreux actif théorique, sachant que le nombre de moles de métal alcalin ou alcalino-terreux actif théorique est égal au nombre de moles de métal alcalin ou alcalino-terreux total introduit moins le nombre de moles métal alcalin ou alcalino-terreux utilisé pour neutraliser les impuretés.

II-B - Détermination de la distribution des masses moléculaires des polymères obtenus par la technique de chromatographie d'exclusion de taille (SEC) :

Préparation du polymère :

Il n'y a pas de traitement particulier de l'échantillon de polymère avant analyse. Celui-ci est simplement solubilisé dans du tétrahydrofurane à une concentration d'environ 1 g/l.

Principe de la mesure :

Les chaînes polymères sont séparées selon la taille qu'elles occupent quand elles sont solubilisées dans le tétrahydrofuranne: plus elles occupent un volume important, moins les pores des colonnes leur sont accessibles et plus leur temps d'élution est faible.

Sans être une méthode absolue, la SEC permet d'appréhender la distribution des masses moléculaires d'un polymère. A partir de produits étalons, les différentes masses moyennes en nombre (Mn) et en poids (Mw) peuvent être déterminées et l'indice de polydispersité calculé (Ip = Mw/Mn).

Le polymère est solubilisé dans du tétrahydrofuranne à une concentration de 1 g/l. Un volume de 100 $\mu$l est injecté à travers un jeu de colonnes de chromatographie d'exclusion stérique. La phase mobile, le tétrahydrofuranne, est éluée avec un débit de 1 ml/min. Les colonnes sont thermostatées dans un four à 35°C. La détection est assurée par un réfractomètre thermostaté à 35°C. La phase stationnaire des colonnes est à base d'un gel de polystyrène divinylbenzène à porosité maîtrisée.

Matériel utilisé :

- Chaîne de chromatographie en phase liquide par exemple la chaîne Alliance 2690 de WATERS, munie d'un dégazeur en ligne
- Réfractomètre, par exemple le réfractomètre 2410 de WATERS
- Logiciel d'acquisition et de traitement des données, par exemple le logiciel MILLENNIUM$^{32}$ de WATERS
- Four à colonnes, par exemple le WATERS columns Heater Module
- filtre de porosité 0.45 $\mu$m pour filtration du tétrahydrofuranne
- Colonnes chromatographiques :

2 colonnes sont montées en série:

| *Numéro* | *Marque* | *Domaine de masses molaires (g/mol)* | *Longueur (mm)* | *Diamètre interne (mm)* | *Taille des particules ($\mu$m)* | *Désignation commerciale* | *Références (à titre indicatif)* |
|---|---|---|---|---|---|---|---|
| Colonne 1 | WATERS | 2 000 - $10^7$ | 300 | 7,8 | 10 | Styragel HT6E | WAT044219 |
| Colonne 2 | WATERS | 2 000 - $10^7$ | 300 | 7,8 | 10 | Styragel HT6E | WAT044219 |

II-C -Détermination de la viscosité inhérente à 25° C d'une solution de polymère à 0,1 g/dl dans le toluène, à partir d'une solution de polymère sec :

PRINCIPE :

La viscosité inhérente est déterminée par la mesure du temps d'écoulement t de la solution de polymère et du temps d'écoulement $t_o$ du toluène, dans un tube capillaire.

Dans un tube Ubbelhode (diamètre du capillaire 0.46 mm, capacité 18 à 22 ml), placé dans un bain thermostaté à 25 $\pm$ 0,1°C, le temps d'écoulement du toluène et celui de la solution polymère à 0,1 g/dl sont mesurés.

La viscosité inhérente est obtenue par la relation suivante :

$$\eta_{inh} = \frac{1}{C} \ln\left[\frac{(t)}{(t_o)}\right]$$

avec :

**C** : concentration de la solution toluénique de polymère en g/dl ;
**t** : temps d'écoulement de la solution toluénique de polymère en secondes ;
$\mathbf{t_o}$ : temps d'écoulement du toluène en secondes ;
$\eta_{inh}$ : viscosité inhérente exprimée en dl/g.

II-D -Détermination de la microstructure des polymères par RMN du carbone 13 :

<u>Préparation de l'échantillon:</u>

- Solvant: CDCl3 (3ml)
- Masse de l'échantillon : 200 mg (effet très influent sur la qualité du spectre, il faut concentrer au maximum)
- Condition de solubilisation : Température ambiante, 1h-2h (minimum)
- Filtration : en cas de présence de particules en suspension

*Réglages de l'expérience RMN :*

Spectromètre : **BRUKER AV250s** **Sònde : DUAL 13C/1H 10mm**

Séquence d'impulsion :

- zgig
- ns = 8192
- dl = 6s
- SW =180ppm
- TD =16k
- Temps d'acquisition : 10h30

II-E- Plasticité Mooney (réalisée sur les élastomères) comme décrit ci-après.

II-F - Détermination de la température de transition vitreuse des polymères :

Les températures de transition vitreuse Tg des polymères sont mesurées au moyen d'un calorimètre différentiel (« differential scanning calorimeter »).
Les compositions de caoutchouc sont caractérisées, avant et après cuisson, comme indiqué ci-après.

II-1. Plasticité Mooney

On utilise un consistomètre oscillant tel que décrit dans la norme ASTM D 1646. La mesure de plasticité Mooney se fait selon le principe suivant : la composition à l'état cru (i.e., avant cuisson) est moulée dans une enceinte cylindrique chauffée à 100°C. Après une minute de préchauffage, selon le cas le rotor de faible largeur ou le rotor large, tourne au sein de l'éprouvette à 2 tours/minute et on mesure le couple utile pour entretenir ce mouvement après 4 minutes de rotation. La plasticité Mooney, respectivement (ML 1+4) et (MS 1+4) est exprimée en "unité Mooney" (UM, avec 1 UM = 0.83 N.m).

II-2. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation au taux d'extension prévu pour la mesure elle-même) les modules sécants nominaux (ou contraintes apparentes, en MPa) à 10% d'allongement (noté MA10), 100% d'allongement (noté MA100) et 300% d'allongement (noté MA300). On mesure également les contraintes à la rupture (en MPa) et les allongements à la rupture (en %). Toutes ces mesures de traction sont effectuées dans les conditions normales de température (23 ± 2°C) et d'hygrométrie (50 ± 5% d'humidité relative), selon la norme française NF T 40-101 (décembre 1979).

II-3. Dureté Shore A

La dureté Shore A des compositions après cuisson est appréciée conformément à la norme ASTM D 2240-86.

II-4. Propriétés dynamiques

Les propriétés dynamiques $\Delta G^*$ max et tan $(\delta)_{max}$ sont mesurées sur un viscoanalyseur (Metravib VA4000), selon la norme ASTM D 5992- 96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0, 1 à 50% (cycle aller), puis de 50% à 1% (cycle retour) . Les résultats exploités sont le module complexe de cisaillement dynamique (G*), le module complexe de cisaillement dynamique G" exprimé par la mesure du maximum de G", noté G" max 23 °C à une amplitude de 0, 1 à 50 % et à une amplitude de déformation de 50 % et le facteur de perte tan (δ) . Pour le cycle retour, on indique la valeur maximale de tan (δ) observée, noté tan $(\delta)_{max}$, ainsi que l'écart de module complexe ($\Delta G^*$) entre les valeurs à 0, 15 et 50% de déformation (effet Payne) .

II-5. Mesure des propriétés hystérétiques

Les propriétés hystérétiques peuvent être évaluées par la mesure des pertes d'énergie par rebond des échantillons à énergie imposée mesurée au 6e choc, dans les conditions normales de température (23°C) ou à des températures plus élevées (60°C) et exprimées en % selon la relation suivante :

$$PH\ (\%) = 100\ [(W0 - W1)\ /\ W0]$$

avec W0 : énergie fournie ; W1 : énergie restituée.

## III. EXEMPLES DE REALISATION DE L'INVENTION

III-1. Préparation des élastomères

A - Synthèse d'un élastomère comprenant en moyenne 2 x 5 greffons de polybutadiène de Mn 10.000 (BR) et un coeur BR de Mn 2 x 50.000.

- Synthèse d'un polybutadiène vivant de Mn 10000

Un réacteur de 10 litres est chargé avec 5500 ml de méthylcyclohexane barboté à l'azote et 870 ml de butadiène. Le milieu étant porté à 60°C, les impuretés étant neutralisées avec 350 μmoles de BuLi, 40 ml de sBuLi à 1,415 mol/l sont introduits. Après quarante minutes de polymérisation à 60°C, la température du milieu réactionnel est abaissée à-5°C.

- Synthèse du macromonomère polybutadiène Mn 10000

A -5°C, 8,7 ml de chlorométhylstyrène (VBC) sont introduits. Après 17 h de contact à-5°C, la température est élevée à nouveau à 60°C.

- Polymérisation du macromonomère, suivie de celle du butadiène et réaction de couplage avec le diméthyldichlorosilane

13, 1 ml de sBuLi à 1, 415 mol/l (dont 39% pour neutraliser l'excès de VBC) sont introduits, puis 9, 6 ml d'une solution de tétrahydrofurfuryléthyléther à 100 g/l. Après 30 minutes de polymérisation du macromonomère à 60°C, 870 ml de butadiène sont ajoutés. Après 15 minutes de polymérisation à 60°C, 9, 7 ml de diméthyldichlorosilane à 0, 536 mol/l sont introduits. Après 30 minutes de contact à 60°C, 1, 4 ml de méthanol dilué dans 150 ml de toluène barboté sont ajoutés au milieu réactionnel.
Enfin, au polymère encore en solution est ajouté 0, 5 pce de 2, 2'- méthylène bis (4- méthyl- 6- tertiobutylphénol) . Le polymère est récupéré sec après séchage en étuve sous pression réduite à 60°C sous azote.

Caractérisation de l'élastomère ainsi préparé:

Tg (ΔT): -76°C (16)
Vinyl : 34,7 % (dont 61 % dans la chaîne principale)
Trans : 37%
Cis : 29 %
Viscosité inhérente à 0,1 g/dl dans le toluène à 25°C : 1,38

Viscosité inhérente à 0,1 g/dl :

- du polybutadiène avant réaction avec le VBC et stoppé au méthanol : 0,26*
- du macromonomère : 0,29*
- du polymacromonomère stoppé au méthanol : 0,49*
- du polymère bloc macromonomère-butadiène : 0,78
- Analyse SEC

  Mn : 89.136
  Mw : 155.885
  Ip : 1,75

* mesure à 0,2 g/dl

B - Synthèse d'un élastomère comprenant en moyenne 2 x 5 greffons SBR de Mn 10000 et un coeur SBR de Mn 2 x 75000 :

- Préparation préalable de la solution de AlLiR4 :

Dans 55,62 ml de méthylcyclohexane barboté sont introduits 7,43 ml de nBuLi à 0,9425 mol/l et 8,2 ml de trioctylaluminium à 0,8747 mol/l.

- Synthèse d'un SBR vivant de Mn 10000

Un réacteur de 10 litres est chargé avec 5455 ml de méthylcyclohexane barboté à l'azote, 398,5 ml de butadiène, 100,0 ml de styrène et 0,605 ml d'éthyltetrahydrofurfuryléther (ETE) dilué dans la charge styrène. Le milieu étant porté à 40°C, les impuretés étant neutralisées avec 400 μmoles de sBuLi, 25,4 ml de sBuLi à 1,38 mol/l sont introduits. Après 55 minutes de polymérisation à 40°C, la température du milieu réactionnel est refroidie. Soit 5 minutes après, la température est de 29°C.

- Synthèse du macromonomère SBR Mn 10000

A la suite, 45,7 ml de la solution de $LiAlR_4$ (soit 1,025 équivalent molaire de ETE) précédemment préparée est injectée à 29°C. La température est alors abaissée à -12°C en l'espace d'une vingtaine de minutes, 5,5 ml de chlorométhylstyrène (VBC, soit 1,1 équivalent molaire lithium actif) sont introduits. Après une nuit à -7°C, la température est élevée à 60°C.

- Polymérisation du macromonomère, suivie de celle du butadiène et styrène, puis réaction de couplage avec le diméthyldichlorosilane

8, 62 ml de sBuLi à 1, 38 mol/l (dont 41% pour neutraliser l'excès de VBC) sont introduits à 60°C, ainsi qu'une solution de ETE dans le méthylcyclohexane (8.37 ml à 0.835 mol/l) . Après 30 minutes de polymérisation du macromonomère à 60°C, 525 g d'une charge à 74% de butadiène et 26% de styrène est injectée. La polymérisation est conduite à une température maintenue entre 58 et 63°C. 22 minutes après, 6, 8 ml d'une solution de diméthyldichlorosilane dans le méthylcyclohexane à 0, 413 mol/l) est introduite au milieu réactionnel. Après 30 minutes de contact à 60°C, 0, 82 ml de méthanol dilué dans 150 ml de toluène barboté est ajouté au milieu réactionnel.

Enfin, au polymère encore en solution est ajouté 0, 4 pce de 2, 2'- méthylène bis (4- méthyl- 6- tertiobutylphénol) . Le polymère est récupéré sec après séchage en étuve sous pression réduite à 60°C sous azote.

Caractérisation :

| de l'élastomère ainsi préparé : | | du greffon : |
|---|---|---|
| Styrène : 25,4% | | styrène: 23,9% |
| Vinyl : 58,0 % | | vinyl : 59,4% |
| Trans : 21,7 % | | trans : 21,7% |
| Cis : 20,4 % | | cis : 20,4% |
| Viscosité inhérente à 0,1 g/dl dans le toluène à 25°C : 1,87 | | |
| Analyse SEC | Mn : 96.529 | |
| | Mw : 240.827 | |
| | Ip : 2,50 | |

C - Synthèse d'un élastomère comprenant en moyenne 2x 5 greffons BR de Mn 10000 et un coeur SBR de Mn 2x 75000 :

- Synthèse d'un BR vivant de Mn 10000

Un réacteur de 10 litres est chargé avec 5500ml de méthylcyclohexane barboté à l'azote, 543 ml de butadiène. Le milieu étant porté à 60°C, les impuretés étant neutralisées avec 600 μmoles de nBuLi, 25.6 ml de sBuLi à 1,38 mol/l sont introduits. Après 50 minutes de polymérisation à 60°C, la température du milieu réactionnel est abaissée à -5°C.

- Synthèse du macromonomère BR Mn 10000

A -5°C, 5,5 ml de chlorométhylstyrène (VBC, soit 1.1 équivalent molaire lithium actif) sont introduits. Après une nuit de contact à -5°C, la température est élevée à nouveau à 60°C.

- Polymérisation du macromonomère, suivie de celle du butadiène et styrène, puis réaction de couplage avec le diméthyldichlorosilane

8, 11 ml de sBuLi à 1, 38 mol/l (dont 37% pour neutraliser l'excès de VBC) sont introduits à 60°C, ainsi qu'une solution de ETE dans le méthylcyclohexane (8, 8 ml à 0, 804 mol/l) . Après 30 minutes de polymérisation du macromonomère à 60°C, 529 g d'une charge à 74% de butadiène et 26% de styrène est injectée. La polymérisation est conduite à une température maintenue entre 56 et 63°C. 22 minutes après, 6, 7 ml d'une solution de diméthyldichlorosilane dans le méthylcyclohexane à 0, 422 mol/l) est introduite au milieu réactionnel. Après 30 minutes de contact à 60°C, 0, 82 ml de méthanol dilué dans 150 ml de toluène barboté est ajouté au milieu réactionnel.

Enfin, au polymère encore en solution est ajouté 0, 4 pce de 2, 2'- méthylène bis (4- méthyl- 6- tertiobutylphénol)

. Le polymère est récupéré sec après séchage en étuve sous pression réduite à 60°C sous azote.

Caractérisation :

| de l'élastomère ainsi préparé : | | du greffon : |
|---|---|---|
| Styrène : 14,9% | | |
| Vinyl : 33,7% | | vinyl : 7,1% |
| Trans: 34,9% | | trans : 49,8% |
| Cis: 31,8% | | cis : 43,1% |
| Viscosité inhérente à 0,1 g/dl dans le toluène à 25°C : 1,97 | | |
| Analyse SEC | Mn : 123.616 | |
| | Mw : 263.626 | |
| | Ip : 2,13 | |

D - Synthèse d'un élastomère bloc EB1 comprenant en moyenne 2 x 5 greffons BR de Mn 10.000 et un coeur BR de Mn 2 x 50.000.

- Synthèse d'un polybutadiène vivant de Mn 10000

Un réacteur est chargé avec 49687 ml de méthylcyclohexane barboté à l'azote et 8184 ml de butadiène. Le milieu étant porté à 60°C, les impuretés étant neutralisées avec 4,54 mmoles de BuLi, 2111 ml de sBuLi à 0,252 mol/l sont introduits. Après 50 minutes de polymérisation à 60°C, la température du milieu réactionnel est abaissée à -5°C.

- Synthèse du macromonomère polybutadiène Mn 10000

A -5°C, 160 ml de chlorométhylstyrène (VBC) à 3,5 mol/l sont introduits. Après une nuit de contact à -5°C, la température est élevée à nouveau à 60°C.

- Polymérisation du macromonomère, suivie de celle du butadiène et réaction de couplage avec le diméthyldichlorosilane

597 ml de sBuLi à 0,252 mol/l (dont 29% pour neutraliser l'excès de VBC) sont introduits, puis 582 ml d'une solution de tétrahydrofurfuryléthyléther à 0,134 mol/l. Après 30 minutes de polymérisation du macromonomère à 60°C, 8184 ml de butadiène sont ajoutés. Après 14 minutes de polymérisation à une température s'élevant jusqu'à 76°C, 1404 ml de diméthyldichlorosilane à 0,035 mol/l sont introduits. Après 30 minutes de contact à 60°C, 641 ml de méthanol à 0,5 mol/l dans le toluène barboté sont ajoutés au milieu réactionnel.

Enfin, au polymère encore en solution est ajouté :

- 0, 8 pce de 2, 2'- méthylène bis (4- méthyl- 6- tertiobutylphénol)
- 0,2 pce de N-1,3 diméthylbutyl N-phénylparaphénylènediamine.

Le polymère est récupéré sec après stripping et séchage sur Welding (extrudeuse monovis équipée d'une filière 1 trou de 3 mm et 6 trous de 6 mm).

Caractérisation de l'élastomère ainsi préparé :

Tg (ΔT) : -80°C
Vinyl : 31.0%, Trans : 39.7%, Cis : 29.3%
Viscosité inhérente à 0,1 g/dl dans le toluène à 25°C : 1,55
Analyse SEC : Mn 114106 ; Mw 205235 ; Ip 1,80
(ML 1+4) : 47
Caractérisation du greffon :Vinyl : 8.2%, Trans : 54.9%, Cis : 36.9%

E - Synthèse d'un élastomère bloc EB2 comprenant en moyenne 2 x 5 greffons BR de Mn 10.000 et un coeur de BR de Mn 2 x 75.000 :

- Synthèse d'un polybutadiène vivant de Mn 10000

Un réacteur est chargé avec 53172 ml de méthylcyclohexane barboté à l'azote et 5391 ml de butadiène. Le milieu étant porté à 60°C, les impuretés étant neutralisées avec 4,45 mmoles de BuLi, 1419 ml de sBuLi à 0,247 mol/l sont introduits. Après 60 minutes de polymérisation à 60°C, la température du milieu réactionnel est abaissée à -5°C.

- Synthèse du macromonomère polybutadiène Mn 10000

A -5°C, 105 ml de chlorométhylstyrène (VBC) à 3,5 mol/l sont introduits. Après une nuit de contact à -5°C, la température est élevée à nouveau à 60°C.

- Polymérisation du macromonomère, suivie de celle du butadiène et réaction de couplage avec le diméthyldichlorosilane

424 ml de sBuLi à 0,247 mol/l (dont 33% pour neutraliser l'excès de VBC) sont introduits, puis 586 ml d'une solution , de tétrahydrofurfuryléthyléther à 0,134 mol/l. Après 30 minutes de polymérisation du macromonomère à 60°C, 8086 ml de butadiène sont ajoutés selon le protocole suivant : 1300 ml sont d'abord injectés en une seule fois, puis le complément est introduit environ 4 minutes plus tard à raison de 250 g/min.

Après 15 minutes de polymérisation à une température s'élevant de 40 à 76°C, 882 ml de diméthyldichlorosilane à 0,035 mol/l sont introduits. Après 30 minutes de contact à 60°C, 421 ml de méthanol à 0,5 mol/l dans le toluène barboté sont ajoutés au milieu réactionnel.

Enfin, au polymère encore en solution est ajouté :

- 0, 8 pce de 2, 2'- méthylène bis (4- méthyl- 6- tertiobutylphénol)
- 0,2 pce de N-1,3 diméthylbutyl N-phénylparaphénylènediamine.

Le polymère est récupéré sec après stripping et séchage sur Welding (extrudeuse monovis équipée d'une filière 1 trou de 3 mm et 6 trous de 6 mm).

Caractérisation de l'élastomère ainsi préparé :

Tg (ΔT) : -74°C
Vinyl : 36,0%, Trans : 36,6%, Cis : 27,4%
Viscosité inhérente à 0,1 g/dl dans le toluène à 25°C : 2,15
Analyse SEC : Mn 120673; Mw 258258 ; Ip 2,14
(ML 1+4) : 85
Caractérisation du greffon : Vinyl : 7,8%, Trans : 54,9%, Cis : 37,3%

EB2 est la résultante de 3 synthèses :

Tg (ΔT) : -74°C
Vinyl: 35,7 %, Trans : 36,2 %, Cis : 28,1 %
Viscosité inhérente à 0,1 g/dl dans le toluène à 25°C : 2,15
(ML, 1+4) : 91
Analyse SEC : Mn 125160; Mw 256558 ; Ip 2,05

- Synthèse d'un élastomère témoin linéaire non branché (BR linéaire tribloc) :

Un réacteur est chargé avec 41826 ml de méthylcyclohexane barboté à l'azote et 1335 ml de butadiène. Le milieu étant porté à 60°C, les impuretés étant neutralisées avec 2,72 mmoles de BuLi, 351 ml de sBuLi à 0,247 mol/l sont introduits. Après 70 minutes de polymérisation à 60°C (conversion de 100%), sont successivement introduits :

458 ml d'une solution de tétrahydrofurfuryléthyléther à 0,134 mol/l
10018 ml de butadiène selon le protocole suivant : 1300 ml sont d'abord injectés en une seule fois, puis le complément est introduit environ 4 minutes plus tard à raison de 250 g/min. Après 23 minutes de polymérisation à une température s'élevant jusqu'à 75°C, 1091 ml de diméthyldichlorosilane à 0,035 mol/l sont introduits.-Après 30 minutes de contact à 60°C, 521 ml de méthanol à 0,5 mol/l dans le toluène barboté sont ajoutés au milieu réactionnel.

Enfin, au polymère encore en solution est ajouté :

- 0, 8 pce de 2, 2'- méthylène bis (4- méthyl- 6- tertiobutylphénol),
- 0,2 pce de N-1,3 diméthylbutyl N-phénylparaphénylènediamine.

Le polymère est récupéré sec après stripping et séchage en étuve à 50°C sous pression réduite sous azote.

Caractérisation de l'élastomère ainsi préparé :

Tg (ΔT) : -61 °C
Vinyl : 49,3%, Trans : 28,4%, Cis : 22,3%
Viscosité inhérente à 0,1 g/dl dans le toluène à 25 °C : 1,65
Analyse SEC : Mn 122728; Mw 137716 ; Ip 1,12
Caractérisation du 1er bloc BR : Vinyl : 7,5%, Trans : 53,7%, Cis : 38,8%,
Mn 11543 ; Mw 12193 ; Ip 1,06

« BR linéaire tribloc » est la résultante de 4 synthèses type :

Tg (ΔT) : -61°C (8)
Vinyl : 49,3%, Trans : 28,4%, Cis : 22,3%
Viscosité inhérente à 0,1 g/dl dans le toluène à 25 °C : 1,65
Analyse SEC : Mn 128936; Mw 150025 ; Ip 1,16

Les caractéristiques physico-chimiques de ces élastomères sont résumées dansle tableau 1 suivant.

Tableau 1

| | BR linéaire tribloc | EB1 | EB2 |
|---|---|---|---|
| Viscosité inhérente (dl/g) | 1,65 | 1,55 | 2,15 |
| Mooney (ML1+4) 100°C | - | 47 | 91 |
| Fluidité (150 kg) | - | 349 | 146 |
| **Mn du coeur** | **150000** | **100000** | **150000** |
| **Nombre de Greffons** | **2 x 1** | **2 x 5** | **2 x 5** |
| **Mn des greffons** | **10000** | **10000** | **10000** |
| Microstructure globale | | | |
| %1-2 | 49,3 | 31 | 35,7 |
| % trans | 28,4 | 39,7 | 36,2 |
| % cis | 22,3 | 29,3 | 28,1 |
| Microstructure des greffons | | | |
| %1-2 | 7,5 | 8,2 | 7,8 |
| % trans | 52,9 | 54,9 | 54,9 |
| % cis | 39,6 | 36,9 | 37,3 |
| Microstructure du coeur | | | |
| %1-2 | 54,8 | 53,8 | 54,3 |
| % trans | 25,1 | 24,5 | 23,7 |
| % cis | 20 | 21,7 | 22 |

(suite)

| Microstructure du coeur | | | |
|---|---|---|---|
| Tg (°C) | -61,4 | -79,9 | -74 |
| dT (°C) | 8 | 14 | 15 |
| Densité | 0,895 | 0,911 | 0,897 |
| Ip | 1,16 | 1,80 | 2,05 |

L'homme du métier comprendra que des conditions de synthèse modifiées permettraient d'obtenir d'autres élastomères selon l'invention.

III-2. Préparation des compositions de caoutchouc

Deux lots d'élastomères blocs branchés préparés en discontinu selon l'invention comme décrit ci-dessus aux paragraphes III-1-D et E, l'un de masse moléculaire en nombre Mn = 100000 g/mol (EB1), l'autre de masse moléculaire en nombre Mn = 150000 g/mole (EB2) pour le coeur et un élastomère témoin (BR linéaire tribloc) de masse moléculaire 150000 g/mole pour le coeur et possédant un seul greffon par extrémité alors que les élastomères EB1 et EB2 possèdent en moyenne 5 greffons de masse moléculaire 10000 g/mole à chaque extrémité, sont testés en compositions de caoutchouc vulcanisables.

Pour les essais qui suivent, les élastomères ont été testés dans une composition de base renforcée au noir de carbone décrite ci-dessous (taux des différents produits exprimés en pce).

| | |
|---|---|
| Elastomère | 100 |
| Noir de carbone N234 | 50 |
| ZnO | 3 |
| Acide stéarique | 2 |
| Antioxydant* | 1 |
| Soufre Sol 2H | 1,2 |
| Accélérateur** | 1,2 |

* : N-1,3-diméthylbutyl-N-phénylparaphénylènediamine (Santoflex 6-PPD de la société Flexsys);
** : N-cyclohexyl-2-benzothiazyl-sulfénamide (Santocure CBS de la société Flexsys).

Les mélanges ont été réalisés avec les conditions de mélangeage suivantes :

- 0 minute : Elastomère + Noir + ZnO + Acide stéarique
- 5 minutes: Tombée

Chaque composition est réalisée par un travail thermo-mécanique en une étape qui dure environ 5 minutes pour une vitesse moyenne des palettes de 85 tr/minute dans un mélangeur d'environ 400cm$^3$ jusqu'à atteindre une température maximale de tombée identique de 160°C, tandis que l'étape d'incorporation du système vulcanisant est effectuée sur l'outil à cylindres à 30°C pendant 3 à 4 minutes.

Les compositions ainsi obtenues sont ensuite calandrées sous la forme de plaques (épaisseur de 2 à 3 mm) ou de feuilles fines de caoutchouc pour la mesure de leurs propriétés physiques ou mécaniques, ou extrudées pour former des profilés utilisables directement, après découpage et/ou assemblage aux dimensions souhaitées, par exemple comme produits semi-finis pour pneumatiques, en particulier comme bandes de roulement de pneumatiques.

III-3. Evaluation des compositions à base de noir de carbone

Les propriétés des compositions telles que préparées ci-dessus sont présentées dans le tableau 2 suivant.

Tableau 2

| Composition | A | B | C |
|---|---|---|---|
| Gomme | BR linéaire tribloc (Témoin) | EB1 | EB2 |
| Mooney (MS1+4) 100°C | 43,6 | 49,6 | 90,2 |
| Dureté Shore A 23°C | 66,97 | 55,07 | 64,13 |
| MAS 10 (Mpa)<br>MAS 100 (Mpa)<br>MAS 300 (Mpa)<br>MAS 300/MAS 100 | 5,974<br>2,078<br>2,453<br>1,18 | 3,172<br>1,272<br>1,678<br>1,31 | 5,357<br>2,336<br>rupture<br>rupture |
| Pertes à 23°C (%)<br>Déformation (%) | 37,59<br>33,08 | **44,32**<br>**47,94** | **42,32**<br>**34,93** |
| Pertes à 60°C<br>Déformation (%) | 33,42<br>37,89 | **32**<br>**56,21** | **32,07**<br>**42,37** |
| G* 0,1% (MPa) 23°C | 4,94 | 2,91 | 3,67 |
| G* 50% (MPa) | 1,78 | 1,06 | 1,63 |
| ∆G 23°C (MPa) | 3,17 | 1,85 | 2,04 |
| G" max (MPa) 23°C | 0,698 | 0,622 | 0,645 |
| G" 50% (MPa) | 0,288 | 0,301 | 0,369 |
| Tan δ max 23°C | 0,214 | **0,323** | **0,252** |

Ainsi, il apparaît de façon surprenante que les compositions B et C à base respectivement d'élastomères EB1 et EB2, conformes à l'invention, présentent des propriétés hystérétiques à 23°C (Pertes par rebond et tan $(\delta)_{max}$) largement supérieures à celles de la composition A à base d'un élastomère tribloc butadiène témoin (BR) .

Ces différences de propriétés hystérétiques permettent de garantir aux compositions B et C des propriétés d'amortissement nettement améliorées dans une zone de température proche de la Tg par rapport à la composition A témoin.

A haute température (60°C), les propriétés hystérétiques (pertes par rebond) des compositions B et C sont alors équivalentes à celles de la composition A témoin.

L'évolution du Tan(δ) en fonction de la température présentée à la Figure 1 permet d'illustrer l'augmentation de l'hystérèse dans une gamme de température comprise entre 0°C et 60°C pour les compositions B et C à base d'élastomères selon l'invention.

En résumé, grâce à l'incorporation dans les compositions de caoutchouc d'un élastomère selon l'invention, il est possible d'obtenir une augmentation significative de l'hystérèse dans une certaine gamme de températures par rapport aux mélanges noir habituels.

L'invention trouve des applications particulièrement avantageuses dans les compositions de caoutchouc utilisables pour la fabrication d'articles finis ou produits semi-finis entrant dans la composition d'enveloppes de pneumatiques, tels que par exemple des sous-couches, des flancs, des bandes de roulement et d'obtenir des pneumatiques possédant une adhérence ou un confort amélioré.

## Revendications

1. Elastomères blocs comprenant au moins deux chaînes polymériques principales diéniques linéaires (branches) reliées entre elles par un groupe présentant un hétéroatome choisi parmi le groupe constitué par Si, Sn, Ge, Pb, P, issu d'un agent de couplage, ou par un radical issu d'un agent de couplage électrophile au moins difonctionnel non polymérisable, et présentant à chacune de leurs autres extrémités au moins deux chaînes polymériques diéniques linéaires (greffons).

2. Elastomères blocs selon la revendication 1, **caractérisés en ce que** les élastomères comprennent de 2 à 6 chaînes polymériques principales diéniques linéaires (branches).

**3.** Elastomères blocs selon la revendication 1, **caractérisés en ce qu'**ils présentent deux chaînes polymériques principales diéniques linéaires (branches)- .

**4.** Elastomères blocs comprenant une chaîne polymérique principale diénique linéaire et au moins deux chaînes polymériques diéniques linéaires placées toutes à l'une des deux extrémités de ladite chaîne polymériques linéaire principale diénique, l'autre extrémité portant :

- une fonction (Z) de type électrophile, avantageusement du type acide carboxylique, alcool, aminé, silanol, alcoxysilane, ou organostannylée,
- ou un proton.

**5.** Elastomères blocs selon les revendications 1 à 3, **caractérisés en ce qu'**ils comprennent en moyenne de 2 à 25 chaînes polymériques diéniques linéaires (greffons) placées à une des extrémités de chaque chaîne polymérique principale diénique.

**6.** Elastomères blocs selon la revendication 4, **caractérisés en ce qu'**ils comprennent en moyenne de 2 à 25 chaînes polymériques diéniques (greffons) placées à l'extrémité de la chaîne polymériques principale diénique.

**7.** Elastomères blocs selon l'une des revendications 1 à 6, **caractérisés en ce que** les polymères diéniques présents dans la chaîne polymérique principale ou dans les chaînes polymériques diéniques (greffons) placées à une des extrémités de la ou des chaîne(s) polymérique(s) principale(s) sont choisis parmi les polybutadiènes (BR), les polyisoprènes de synthèse (IR), les copolymères de butadiène, les copolymères d'isoprène et les mélanges de ces polymères.

**8.** Elastomères blocs selon l'une des revendications 1 à 7, **caractérisés en ce que** la longueur de la ou des chaîne (s) polymérique(s) principale(s) est supérieure à la longueur d'un greffon.

**9.** Elastomères blocs selon la revendication 8, **caractérisés en ce que** la longueur de chaque greffon est de 1000 à 4 fois, avantageusement de 100 à 10 fois, plus petite que celle de la chaîne principale.

**10.** Elastomères blocs selon l'une des revendications précédentes, **caractérisés en ce que** chaque partie polymérique d'une chaîne principale présente un poids moléculaire en nombre compris entre 2000 et 500000, avantageusement compris entre 50000 et 300000.

**11.** Elastomères blocs selon l'une des revendications précédentes, **caractérisés en ce que** la longueur de chaque chaîne présente aux extrémités d'une chaîne principale (greffons) possède un poids moléculaire en nombre compris entre 500 et 70000, avantageusement compris entre 5000 et 25000.

**12.** Procédé de préparation d'élastomères blocs, **caractérisé en ce qu'**il comprend au moins les étapes suivantes:

(1) synthèse d'un macromonomère par réaction d'au moins un polymère diénique vivant présentant un carbanion avec un excès stoechiométrique d'un composé présentant un groupement polymérisable par voie anionique et un groupement susceptible de déplacement nucléophile par le carbanion dudit polymère vivant
(2) réaction de la solution du macromonomère formé à l'étape (1) avec un initiateur nucléophile, pour obtenir un polymacromonomère vivant,
(3) réaction du polymacromonomère vivant obtenu à l'étape (2) avec au moins un monomère diène conjugué ayant de 4 à 12 atomes de carbone, tel que le butadiène, afin d'obtenir un dibloc vivant polymacromonomère-polymère diénique,
(4) réaction du dibloc vivant obtenu à l'étape (3) avec un agent de couplage électrophile au moins difonctionnel non polymérisable, avec un réactif électrophile précurseur de groupes fonctionnels ou avec un composé donneur de proton acide.

**13.** Procédé selon la revendication précédente, **caractérisé en ce que** le polymère diénique vivant est choisi parmi les polybutadiènes (BR), les polyisoprènes de synthèse (IR), les copolymères de butadiène, les copolymères d'isoprène, les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels (co)polymères

**14.** Procédé selon l'une des revendications 12 et 13, **caractérisé en ce que** le composé présentant à la fois un groupement polymérisable par voie anionique et un groupement susceptible de déplacement nucléophile par le carbanion dudit polymère vivant est un composé présentant une fonction styryle d'une part et un atome d'halogène réactif vis-à-vis des nucléophiles.

**15.** Procédé selon la revendication 14, **caractérisé en ce que** le composé présentant à la fois un groupement polymérisable par voie anionique et un groupement susceptible de déplacement nucléophile par le carbanion dudit polymère vivant est choisi parmi le chlorométhylstyrène (VBC), le chlorodiméthylsilylstyrène, le chlorodiméthylsilylméthylstyrène et le bromométhylstyrène.

**16.** Procédé selon l'une des revendications 12 à 15, **caractérisé en ce que** le composté présentant à la fois un groupement polymérisable par voie anionique et un groupement susceptible de déplacement nucléophile par le carbanion dudit polymère vivant est utilisé en excès stoechiométrique par rapport à la quantité de métal alcalin ou alcalino-terreux théorique dans un rapport strictement supérieur à 1,0 et inférieur à 2 équivalents molaires, et préférentiellement de 1,05 à 1,5 équivalents molaires.

**17.** Procédé selon l'une des revendications 12 à 16, **caractérisé en ce que** la température de réaction de l'étape (1) est comprise entre -20°C et 70°C, avantageusement de-10°C à 5°C.

**18.** Procédé selon l'une des revendications 12 à 17, **caractérisé en ce que** l'initiateur nucléophile utilisé à l'étape (2) est choisi parmi sec- butyllithium, n- butyllithium, t- butyllithium, napthalènesodium, 1, 4- disodio- 1, 1, 4, 4- tetraphénylbutane, diphénylméthylpotassium, diphénylméthylsodium, 1'- méthylstyryllithium et 1, 1- diphényl- 3- méthylpentyllithium ou les amorceurs d'une fonction amine, imine, étain, alcool éventuellement protégée.

**19.** Procédé selon l'une des revendications 12 à 18, **caractérisé en ce que** les diènes conjugués utilisés à l'étape (3) sont choisis parmi le butadiène- 1, 3, le 2- méthyl- 1, 3- butadiène, les 2, 3- di (akyle en C1 à C5)- 1, 3- butadiènes tels que par exemple le 2, 3- diméthyl- 1, 3- butadiène, le 2, 3- diéthyl- 1, 3- butadiène, le 2- méthyl- 3- éthyl- 1, 3- 'butadiène, le 2- méthyl- 3- isopropyl- 1, 3- butadiène, un aryl- 1, 3- butadiène, le 1, 3- pentadiène, et le 2, 4- hexadiène

**20.** Procédé selon l'une des revendications 12 à 19, **caractérisé en ce que** l'agent de couplage électrophile au moins difonctionnel non polymérisable est choisi dans le groupe constitué par les composés de type organométallique répondant aux formules suivantes (IV) : Y $(X)_n$ $(R_1)_{4-n}$, ou (V) : $(R_1)_{3-m}X_mY$- R'- $YX_n$ $(R_1)_{3-n}$ dans lesquelles n est un entier 2, 3 ou 4 (avantageusement 2) ou n' est un entier 1, 2 ou 3, Y est Si, Ge, Sn, Pb, X est un atome d'halogène, ou un groupe alcoxyle ou aryloxy, $R_1$ identique ou différent, est un radical hydrocarboné de $C_1$- $C_{12}$, de préférence un radical alkyle saturé, linéaire, cyclique ou ramifié, de $C_1$- $C_6$, avantageusement le radical méthyle ou éthyle ou un radical aryle en $C_6$- $C_{18}$, avantageusement le groupe phényle, R' étant un radical hydrocarboné insaturé de $C_1$-$C_{12}$, linéaire ou cyclique, de préférence un radical alkylène $C_1$- $C_6$ et avantageusement le radical méthylène, ou arylène en $C_6$- $C_{18}$ et avantageusement le radical phénylène ; les phosphites, avantageusement les composés répondant aux formules P $(OR_1)_3$ ou P $(OAr)_3$ dans lesquelles $R_1$ identique ou différent, est un radical hydrocarboné de $C_1$- $C_{12}$, de préférence un radical alkyle saturé, linéaire, cyclique ou ramifié, de $C_1$- $C_6$ , et Ar est un radical aryle en $C_6$- $C_{18}$; et les dérivés de l'étain répondant à la formule générale (VI) suivante : $(R_1)_{4-n}$ Sn $(X)_n$ dans laquelle $R_1$, X et n ont la signification indiquée ci- dessus ; les esters ; orthoesters ; multiesters ; et les diisocyanates.

**21.** Procédé selon la revendication 20, **caractérisé en ce que** l'agent de couplage électrophile au moins difonctionnel non polymérisable est choisi parmi les composés de formule (IV) : Si $(X)_n$ $(R_1)_{4-n}$ dans laquelle X est un atome d'halogène, $R_1$ identique ou différent, est un radical hydrocarboné de $C_1$- $C_{12}$, de préférence un radical alkyle saturé, linéaire, cyclique ou ramifié, de $C_1$- $C_6$, n est un entier 2, 3 ou 4, et avantageusement le diméthyldichlorosilane.

**22.** Procédé selon l'une des revendications 12 à 21, **caractérisé en ce que** le réactif électrophile précurseur de fonction est choisi parmi les agents de fonctionnalisation précurseurs de fonctions acide carboxylique, alcool, silanol, alcoxysilane, organostannyle, amine et **en ce que** le composé donneur de proton acide est le méthanol.

**23.** Procédé selon l'une des revendications 12 à 21, **caractérisé en ce que** la quantité de l'agent de couplage électrophile au moins difonctionnel non polymérisable est comprise entre 0,1 et 0,5 équivalent molaire par rapport au composé obtenu à l'étape (3).

**24.** Procédé selon la revendication 12 ou 22, **caractérisé en ce que** la quantité du composé donneur de proton ou d'un agent de fonctionnalisation est compris entre 1 et 10 équivalent molaire, préférentiellement entre 1 et 3.

**25.** Procédé selon l'une des revendications 12 à 24, **caractérisé en ce que** le procédé comprend en outre une étape (5) mettant en contact le polymère obtenu à l'issue de l'étape (4) avec un agent anti-oxydant.

**26.** Polymacromonomère diénique obtenu par réaction du polymacromonomère diénique vivant obtenu à l'issue de l'étape 2 du procédé selon la revendication 12, soit avec un réactif électrophile précurseur de groupes fonctionnels tels que notamment alcool, acide carboxylique, amine, silanol, alcoxysilane ou organostannyle, soit avec un composé donneur de proton acide.

**27.** Composition de caoutchouc, utilisable pour la fabrication de pneumatiques, à base d'au moins : un élastomère bloc défini selon l'une des revendications 3, 5 et 7 à 11 et une charge renforçante.

**28.** Composition selon la revendication 27, **caractérisée en ce que** la charge renforçante est présente à un taux compris entre 20 et 200 pce, de préférence entre 30 et 150 pce (parties en poids pour cent d'élastomère diénique).

**29.** Composition selon l'une quelconque des revendications 27 et 28, la charge renforçante étant majoritairement une charge inorganique, de préférence de la silice.

**30.** Composition selon l'une quelconque des revendications 27 à 28, la charge renforçante étant majoritairement une charge organique, de préférence du noir de carbone.

**31.** Composition selon l'une quelconque des revendications 27 à 30, **caractérisée en ce qu'**elle comporte en outre un système de vulcanisation.

**32.** Composition selon la revendication 31, **caractérisée en ce qu'**elle se trouve à l'état vulcanisé.

**33.** Utilisation d'une composition selon l'une quelconque des revendications 27 à 31, pour la fabrication d'un article fini ou d'un produit semi-fini destiné à un système de liaison au sol de véhicule automobile.

**34.** Utilisation selon la revendication 33, **caractérisée en ce que** l'article fini est un pneumatique.

**35.** Utilisation selon la revendication 34, **caractérisée en ce que** les produits semi-finis destinés aux pneumatiques sont choisis dans le groupe constitué par les bandes de roulement, les sous-couches, les nappes d'armature de sommet, les flancs, les nappes d'armature de carcasse, les talons, et les protecteurs.

**36.** Article fini ou produit semi-fini destiné à un système de liaison au sol de véhicule automobile, comportant une composition selon l'une quelconque des revendications 27 à 32.

**37.** Article fini selon la revendication 36, consistant en un pneumatique.

**38.** Produit semi-fini selon la revendication 36, consistant en un produit semi-fini pour pneumatique.

**39.** Produit semi-fini selon la revendication 38, choisi dans le groupe constitué par les bandes de roulement, les sous-couches de ces bandes de roulement, les nappes sommet, les flancs, les nappes carcasse, les talons, et les protecteurs.

**Patentansprüche**

**1.** Blockelastomere mit mindestens zwei linearen Dienpolymerhauptketten (Arme), die durch eine Gruppe mit einem Heteroatom aus der Gruppe bestehend aus Si, Sn, Ge, Pb und P, die sich von einem Kupplungsmittel ableitet, oder durch einen Rest, der sich von einem mindestens difunktionellen nicht polymerisierbaren elektrophilen Kupplungsmittel ableitet, miteinander verbunden sind und jeweils an ihren anderen Enden mindestens zwei lineare Dienpolymerketten (Pfropfanteile) aufweisen.

**2.** Blockelastomere nach Anspruch 1, **dadurch gekennzeichnet, dass** die Elastomere 2 bis 6 lineare Dienpolymerhauptketten (Arme) umfassen.

**3.** Blockelastomere nach Anspruch 1, **dadurch gekennzeichnet, dass** sie zwei lineare Dienpolymerhauptketten (Arme) umfassen.

4. Blockelastomere mit einer linearen Dienpolymerhauptkette und mindestens zwei linearen Dienpolymerketten, die alle an einem der beiden Enden der linearen Dienpolymerhauptkette angeordnet sind, wobei das andere Ende

   - eine Funktion (Z) vom elektrophilen Typ, vorteilhafterweise vom Carbonsäure-, Alkohol-, Amin-, Silanol-, Alkoxysilan- oder Organostannyl-Typ,
   - oder ein Proton

   trägt.

5. Blockelastomere nach einem der Ansprüche 1 bis 3, **dadurch gekennzeichnet, dass** sie durchschnittlich 2 bis 25 lineare Dienpolymerketten (Pfropfanteile), die an einem der Enden jeder Dienpolymerhauptkette angeordnet sind, umfassen.

6. Blockelastomere nach Anspruch 4, **dadurch gekennzeichnet, dass** sie durchschnittlich 2 bis 25 Dienpolymerketten (Pfropfanteile), die am Ende der Dienpolymerhauptkette angeordnet sind, umfassen.

7. Blockelastomere nach einem der Ansprüche 1 bis 6, **dadurch gekennzeichnet, dass** die Dienpolymere, die in der Polymerhauptkette oder in den Dienpolymerketten (Pfropfanteilen), die an einem der Enden der Polymerhauptkette bzw. der Polymerhauptketten angeordnet sind, vorliegen, aus Polybutadienen (BR), synthetischen Polyisoprenen (IR), Butadien- Copolymeren, Isopren- Copolymeren und Mischungen dieser Polymere ausgewählt sind.

8. Blockelastomere nach einem der Ansprüche 1 bis 7, **dadurch gekennzeichnet, dass** die Länge der Polymerhauptkette bzw. der Polymerhauptketten größer als die Länge eines Pfropfanteils ist.

9. Blockelastomere nach Anspruch 8, **dadurch gekennzeichnet, dass** die Länge jedes Pfropfanteils 1000-bis 4-mal, vorteilhafterweise 100- bis 10-mal, kleiner als die Länge der Hauptkette ist.

10. Blockelastomere nach einem der vorhergehenden Ansprüche, **dadurch gekennzeichnet, dass** jeder Polymerteil einer Hauptkette ein zahlenmittleres Molekulargewicht zwischen 2000 und 500.000, vorteilhafterweise zwischen 50.000 und 300.000, aufweist.

11. Blockelastomere nach einem der vorhergehenden Ansprüche, **dadurch gekennzeichnet, dass** die Länge jeder an den Enden einer Hauptkette vorliegenden Kette (Pfropfanteile) ein zahlenmittleres Molekulargewicht zwischen 500 und 70.000, vorzugsweise zwischen 5000 und 25.000, liegt.

12. Verfahren zur Herstellung von Blockelastomeren, **dadurch gekennzeichnet, dass** es zumindest die folgenden Schritte umfasst:

   (1) Synthese eines Makromonomers durch Umsetzung mindestens eines lebenden Dienpolymers, das ein Carbanion aufweist, mit einem stöchiometrischen Überschuss einer Verbindung, die eine anionisch polymerisierbare Gruppe und eine Gruppe, die durch das Carbanion des lebenden Polymers nucleophil substituiert werden kann, aufweist,
   (2) Umsetzung der Lösung des in Schritt (1) gebildeten Makromonomers mit einem nucleophilen Initiator zum Erhalt eines lebenden Polymakromonomers,
   (3) Umsetzung des in Schritt (2) erhaltenen lebenden Polymakromonomers mit mindestens einem konjugierten Dienmonomer mit 4 bis 12 Kohlenstoffatomen, wie Butadien, zum Erhalt eines lebenden Polymakromonomer-Dienpolymer- Diblocks,
   (4) Umsetzung des in Schritt (3) erhaltenen lebenden Diblocks mit einem mindestens difunktionellen nicht polymerisierbaren elektrophilen Kupplungsmittel, mit einem elektrophilen Reagens, bei dem es sich um eine Vorstufe funktioneller Gruppen handelt, oder mit einer saure Protonen liefernden Verbindung.

13. Verfahren nach dem vorhergehenden Anspruch, **dadurch gekennzeichnet, dass** man das lebende Dienpolymer aus Polybutadienen (BR), synthetischen Polyisoprenen (IR), Butadien-Copolymeren, Isopren-Copolymeren, Butadien-Styrol-Copolymeren (SBR), Isopren-Butadien-Copolymeren (BIR), Isopren-Styrol-Copolymeren (SIR), Isopren-Butadien/Styrol-Copolymeren (SBIR) und Mischungen derartiger (Co)Polymere auswählt.

**14.** Verfahren nach einem der Ansprüche 12 und 13, **dadurch gekennzeichnet, dass** es sich bei der Verbindung, die sowohl eine anionisch polymerisierbare Gruppe als auch eine Gruppe, die durch das Carbanion des lebenden Polymers nucleophil substituiert werden kann, aufweist, um eine Verbindung, die einerseits eine Styrylfunktion und ein gegenüber Nucleophilen reaktives Halogenatom aufweist, handelt.

**15.** Verfahren nach Anspruch 14, **dadurch gekennzeichnet, dass** man die Verbindung, die sowohl eine anionisch polymerisierbare Gruppe als auch eine Gruppe, die durch das Carbanion des lebenden Polymers nucleophil substituiert werden kann, aufweist, aus Chlormethylstyrol (VBC), Chlordimethylsilylstyrol, Chlordimethylsilylmethylstyrol und Brommethylstyrol auswählt.

**16.** Verfahren nach einem der Ansprüche 12 bis 15, **dadurch gekennzeichnet, dass** man die Verbindung, die sowohl eine anionisch polymerisierbare Gruppe als auch eine Gruppe, die durch das Carbanion des lebenden Polymers nucleophil substituiert werden kann, aufweist, in stöchiometrischem Überschuss in Bezug auf die theoretische Alkalimetall- oder Erdalkalimetallmenge in einem Verhältnis, das streng über 1,0 und unter 2 Moläquivalenten liegt und vorzugsweise 1,05 bis 1,5 Moläquivalente beträgt, verwendet.

**17.** Verfahren nach einem der Ansprüche 12 bis 16, **dadurch gekennzeichnet, dass** die Reaktionstemperatur von Schritt (1) zwischen -20°C und 70°C liegt und vorteilhafterweise -10°C bis 5°C beträgt.

**18.** Verfahren nach einem der Ansprüche 12 bis 17, **dadurch gekennzeichnet, dass** man den in Schritt (2) verwendeten nucleophilen Initiator aus sec.- Butyllithium, n- Butyllithium, t- Butyllithium, Naphthalinnatrium, 1, 4- Dinatrium- 1, 1, 4, 4- tetraphenylbutan, Diphenylmethylkalium, Diphenylmethylnatrium, 1'- Methylstyryllithium und 1, 1- Diphenyl-3- methylpentyllithium oder Initiatoren mit einer gegebenenfalls geschützten Amin-, Imin-, Zinn- oder Alkoholfunktion auswählt.

**19.** Verfahren nach einem der Ansprüche 12 bis 18, **dadurch gekennzeichnet, dass** man die in Schritt (3) verwendeten konjugierten Diene aus 1, 3- Butadien, 2- Methyl- 1, 3- butadien, 2, 3- Di ($C_1$- bis $C_5$- alkyl)- 1, 3- butadienen wie beispielsweise 2, 3- Dimethyl- 1, 3- butadien, 2, 3- Diethyl- 1, 3- butadien, 2- Methyl- 3- ethyl- 1, 3- butadien, 2-Methyl- 3- isopropyl- 1, 3- butadien, einem Aryl- 1, 3- butadien, 1, 3- Pentadien und 2, 4- Hexadien auswählt.

**20.** Verfahren nach einem der Ansprüche 12 bis 19, **dadurch gekennzeichnet, dass** man das mindestens difunktionelle nicht polymerisierbare elektrophile Kupplungsmittel aus der Gruppe bestehend aus Verbindungen vom Organometall- Typ der folgenden Formeln (IV) : $Y (X)_n (R_1)_{4-n}$ oder (V) : $(R_1)_{3-m'}X_{m'}Y- R'- YX_{n'} (R_1)_{3-n}$, worin n für eine ganze Zahl mit einem Wert von 2, 3 oder 4 (vorteilhafterweise 2) steht bzw. n' für eine ganze Zahl mit einem Wert von 1, 2 oder 3 steht, Y für Si, Ge, Sn oder Pb steht, X für ein Halogenatom oder eine Alkoxy- oder Aryloxygruppe steht, $R_1$ gleich oder verschieden ist und für einen $C_1$- $C_{12}$- Kohlenwasserstoffrest, vorzugsweise einen linearen, cyclischen oder verzweigten gesättigten $C_1$- $C_6$- Alkylrest, vorteilhafterweise einen Methyl- oder Ethylrest, oder einen $C_6$- $C_{18}$-Arylrest, vorzugsweise eine Phenylgruppe, steht, wobei R' für einen linearen oder cyclischen ungesättigten $C_1$- $C_{12}$-Kohlenwasserstoffrest, vorzugsweise einen $C_1$- $C_6$- Alkylenrest und vorteilhafterweise einen Methylenrest, oder einen $C_6$- $C_{18}$- Arylenrest und vorteilhafterweise einen Phenylenrest steht; Phosphiten, vorteilhafterweise Verbindungen der Formeln $P (OR_1)_3$ oder $P (OAr)_3$, worin $R_1$ gleich oder verschieden ist und für einen $C_1$- $C_{12}$- Kohlenwasserstoffrest, vorzugsweise einen linearen, cyclischen oder verzweigten gesättigten $C_1$- $C_6$- Alkylrest, steht und Ar für einen $C_6$- $C_{18}$- Arylrest steht; und Zinnderivaten der folgenden allgemeinen Formel (VI) : $(R_1)_{4-n}Sn (X)_n$, worin $R_1$, X und n die oben angegebene Bedeutung besitzen; Estern; Orthoestern; Multiestern und Diisocyanaten auswählt.

**21.** Verfahren nach Anspruch 20, **dadurch gekennzeichnet, dass** man das mindestens difunktionelle nicht polymerisierbare elektrophile Kupplungsmittel aus Verbindungen der Formel (IV) : $Si (X)_n (R_1)_{4-n}$, worin X für ein Halogenatom steht, $R_1$ gleich oder verschieden ist und für einen $C_1$- $C_{12}$- Kohlenwasserstoffrest, vorzugsweise einen linearen, cyclischen oder verzweigten gesättigten $C_1$- $C_6$- Alkylrest, steht, n für eine ganze Zahl mit einem Wert von 2, 3 oder 4 steht, und vorteilhafterweise Dimethyldichlorsilan auswählt.

**22.** Verfahren nach einem der Ansprüche 12 bis 21, **dadurch gekennzeichnet, dass** man das elektrophile Reagens, bei dem es sich um eine Funktionsvorstufe handelt, aus Funktionalisierungsmitteln, bei denen es sich um Vorstufen von Carbonsäure-, Alkohol-, Silanol-, Alkoxysilan-, Organostannyl-, Aminfunktionen handelt, auswählt und es sich bei der saure Protonen liefernden Verbindung um Methanol handelt.

**23.** Verfahren nach einem der Ansprüche 12 bis 21, **dadurch gekennzeichnet, dass** die Menge des mindestens difunktionellen nicht polymerisierbaren elektrophilen Kupplungsmittels zwischen 0,1 und 0,5 Moläquivalent in Bezug

auf die in Schritt (3) erhaltene Verbindung liegt.

**24.** Verfahren nach Anspruch 12 oder 22, **dadurch gekennzeichnet, dass** die Menge der Protonen liefernden Verbindung bzw. des Funktionalisierungsmittels zwischen 1 und 10 Moläquivalent, vorzugsweise zwischen 1 und 3, liegt.

**25.** Verfahren nach einem der Ansprüche 12 bis 24, **dadurch gekennzeichnet, dass** das Verfahren außerdem einen Schritt (5) umfasst, bei dem man das am Ende von Schritt (4) erhaltene Polymer mit einem Antioxidans in Berührung bringt.

**26.** Dienpolymakromonomer, erhalten durch Umsetzung des am Ende von Schritt 2 des Verfahren nach Anspruch 12 erhaltenen lebenden Dienpolymakromonomers entweder mit einem elektrophilen Reagens, bei dem es sich um eine Vorstufe von funktionellen Gruppen wie insbesondere Alkohol-, Carbonsäure-, Amin-, Silanol-, Alkoxysilan- oder Organostannylgruppen handelt, oder mit einer saure Protonen liefernden Verbindung.

**27.** Kautschukzusammensetzung, die zur Herstellung von Luftreifen geeignet ist, auf der Basis mindestens:

eines Blockelastomers gemäß einem der Ansprüche 3, 5 und 7 bis 11 und eines verstärkenden Füllstoffs.

**28.** Zusammensetzung nach Anspruch 27, **dadurch gekennzeichnet, dass** der verstärkende Füllstoff in einer Menge zwischen 20 und 200 phe und vorzugsweise zwischen 30 und 150 phe (Gewichtsteile pro hundert Teile Dienelastomer) vorliegt.

**29.** Zusammensetzung nach einem der Ansprüche 27 und 28, wobei es sich bei dem verstärkenden Füllstoff überwiegend um einen anorganischen Füllstoff, vorzugsweise Kieselsäure, handelt.

**30.** Zusammensetzung nach einem der Ansprüche 27 und 28, wobei es sich bei dem verstärkenden Füllstoff überwiegend um einen organischen Füllstoff, vorzugsweise Ruß, handelt.

**31.** Zusammensetzung nach einem der Ansprüche 27 bis 30, **dadurch gekennzeichnet, dass** sie außerdem ein Vulkanisationssystem umfasst.

**32.** Zusammensetzung nach Anspruch 31, **dadurch gekennzeichnet, dass** sie in vulkanisiertem Zustand vorliegt.

**33.** Verwendung einer Zusammensetzung nach einem der Ansprüche 27 bis 31 zur Herstellung eines Fertigartikels oder Halbzeugs für ein Bodenkontaktsystem eines Kraftfahrzeugs.

**34.** Verwendung nach Anspruch 33, bei dem es sich bei dem Fertigartikel um einen Luftreifen handelt.

**35.** Verwendung nach Anspruch 34, **dadurch gekennzeichnet, dass** die Halbzeuge für Luftreifen aus der Gruppe bestehend aus Laufflächen, Unterschichten, Scheitelbewehrungslagen, Seitenwänden, Karkassenbewehrungslagen, Wülsten und Protektoren ausgewählt sind.

**36.** Fertigartikel oder Halbzeug für ein Bodenkontaktsystem eines Kraftfahrzeugs, umfassend eine Zusammensetzung nach einem der Ansprüche 27 bis 32.

**37.** Fertigartikel nach Anspruch 36, bestehend aus einem Luftreifen.

**38.** Halbzeug nach Anspruch 36, bestehend aus einem Halbzeug für Luftreifen.

**39.** Halbzeug nach Anspruch 38, ausgewählt aus der Gruppe bestehend aus Laufflächen, Unterschichten für diese Laufflächen, Scheitellagen, Seitenwänden, Karkassenlagen, Wülsten und Protektoren.

## Claims

**1.** Block elastomers comprising at least two main linear diene polymer chains (branches) joined together by a group having a heteroatom chosen from the group composed of Si, Sn, Ge, Pb, P, derived from a coupling agent, or by a radical derived from an at least difunctional, non-polymerizable, electrophilic coupling agent, and having at each

of their other ends at least two linear diene polymer chains (grafts).

2. Block elastomers according to Claim 1, **characterized in that** the elastomers comprise from 2 to 6 main linear diene polymer chains (branches).

3. Block elastomers according to Claim 1, **characterized in that** they have two main linear diene polymer chains (branches).

4. Block elastomers comprising a main linear diene polymer chain and at least two linear diene polymer chains all placed at one of the two ends of said main linear diene polymer chain, the other end bearing:

   - an electrophilic-type function (Z), advantageously of the carboxylic acid, alcohol, amine, silanol, alkoxysilane, or organostannylated type; or
   - a proton.

5. Block elastomers according to Claims 1 to 3, **characterized in that** they comprise, on average, from 2 to 25 linear diene polymer chains (grafts) placed at one of the ends of each main diene polymer chain.

6. Block elastomers according to Claim 4, **characterized in that** they comprise, on average, from 2 to 25 diene polymer chains (grafts) placed at the end of the main diene polymer chain.

7. Block elastomers according to one of Claims 1 to 6, **characterized in that** the diene polymers present in the main polymer chain or in the diene polymer chains (grafts) placed at one of the ends of the main polymer chain or chains are chosen from polybutadienes (BRs), synthetic polyisoprenes (IRs), butadiene copolymers, isoprene copolymers and blends of these polymers.

8. Block elastomers according to one of Claims 1 to 7, **characterized in that** the length of the main polymer chain or chains is greater than the length of a graft.

9. Block elastomers according to Claim 8, **characterized in that** the length of each graft is from 1000 to 4 times, advantageously from 100 to 10 times, smaller than that of the main chain.

10. Block elastomers according to one of the preceding claims, **characterized in that** each polymeric part of a main chain has a number-average molecular weight between 2000 and 500 000, advantageously between 50 000 and 300 000.

11. Block elastomers according to one of the preceding claims, **characterized in that** the length of each chain present at the ends of a main chain (grafts) has a number-average molecular weight between 500 and 70 000, advantageously between 5000 and 25 000.

12. Process for preparing block elastomers, **characterized in that** it comprises at least the following steps:

    (1) synthesis of a macromonomer by reaction of at least one living diene polymer having a carbanion with a stoichiometric excess of a compound having a group polymerizable by an anionic route and a group capable of nucleophilic displacement via the carbanion of said living polymer;
    (2) reaction of the macromonomer solution formed in step (1) with a nucleophilic initiator, to obtain a living polymacromonomer;
    (3) reaction of the living polymacromonomer obtained in step (2) with at least one conjugated diene monomer having from 4 to 12 carbon atoms, such as butadiene, in order to obtain a living polymacromonomer/diene polymer diblock; and
    (4) reaction of the living diblock obtained in step (3) with an at least difunctional, non-polymerizable, electrophilic coupling agent, with an electrophilic reactant that is a precursor of functional groups or with an acidic proton donor compound.

13. Process according to the preceding claim, **characterized in that** the living diene polymer is chosen from polybutadienes (BRs), synthetic polyisoprenes (IRs), butadiene copolymers, isoprene copolymers, butadiene/styrene copolymers (SBRs), isoprene/butadiene copolymers (BIRs), isoprene/styrene copolymers (SIRs), isoprene/butadiene/styrene copolymers (SBIRs) and blends of such (co)polymers.

**14.** Process according to either of Claims 12 and 13, **characterized in that** the compound having both a group polymerizable by an anionic route and a group capable of nucleophilic displacement via the carbanion of said living polymer is a compound having a styryl function on the one hand and a halogen atom that is reactive with respect to nucleophiles.

**15.** Process according to Claim 14, **characterized in that** the compound having both a group polymerizable by an anionic route and a group capable of nucleophilic displacement via the carbanion of said living polymer is chosen from chloromethylstyrene (VBC), chlorodimethylsilylstyrene, chlorodimethylsilylmethylstyrene and bromomethylstyrene.

**16.** Process according to one of Claims 12 to 15, **characterized in that** the compound having both a group polymerizable by an anionic route and a group capable of nucleophilic displacement via the carbanion of said living polymer is used in stoichiometric excess with respect to the theoretical amount of alkali or alkaline-earth metal in a ratio strictly greater than 1.0 and less than 2 molar equivalents, and preferably from 1.05 to 1.5 molar equivalents.

**17.** Process according to one of Claims 12 to 16, **characterized in that** the reaction temperature of step (1) is between -20°C and 70°C, advantageously from -10°C to 5°C.

**18.** Process according to one of Claims 12 to 17, **characterized in that** the nucleophilic initiator used in step (2) is chosen from sec- butyllithium, n- butyllithium, t- butyllithium, sodium naphthalene, 1, 4- disodio- 1, 1, 4, 4- tetraphenylbutane, diphenylmethylpotassium, diphenylmethylsodium, 1'- methylstyryllithium and 1, 1- diphenyl- 3- methylpentyllithium or the initiators having an optionally protected amine, imine, tin or alcohol functional group.

**19.** Process according to one of Claims 12 to 18, **characterized in that** the conjugated dienes used in step (3) are chosen from 1, 3- butadiene, 2- methyl- 1, 3- butadiene, 2, 3- di ($C_1$ to $C_5$ alkyl)- 1, 3- butadienes such as, for example, 2, 3- dimethyl- 1, 3- butadiene, 2, 3- diethyl- 1, 3- butadiene, 2- methyl- 3- ethyl- 1, 3- butadiene, 2- methyl-3- isopropyl- 1, 3- butadiene, an aryl- 1, 3- butadiene, 1, 3- pentadiene, and 2, 4- hexadiene.

**20.** Process according to one of Claims 12 to 19, **characterized in that** the at least difunctional, non- polymerizable, electrophilic coupling agent is chosen from the group composed of compounds of organometallic type corresponding to the following formulae (IV) : $Y (X)_n (R_1)_{4-n}$, or (V) : $(R_1)_{3-n'}X_{n'}Y$- R'- $YX_{n'} (R_1)_{3-n}$ in which n is an integer 2, 3 or 4 (advantageously 2) or n' is an integer 1, 2 or 3, Y is Si, Ge, Sn, Pb, X is a halogen atom, or an alkoxyl or aryloxy group, $R_1$, being identical or different, is a $C_1$- $C_{12}$ hydrocarbon- based radical, preferably a saturated, linear, cyclic or branched $C_1$- $C_6$ alkyl radical, advantageously a methyl or ethyl radical or a $C_6$- $C_{18}$ aryl radical, advantageously a phenyl group, R' being a linear or cyclic $C_1$- $C_{12}$ unsaturated hydrocarbon- based radical, preferably a $C_1$- $C_6$ alkylene radical and advantageously a methylene radical, or a $C_6$- $C_{18}$ arylene radical and advantageously a phenylene radical; phosphites, advantageously compounds corresponding to the formulae $P (OR_1)_3$ or $P (OAr)_3$ in which $R_1$, being identical or different, is a $C_1$- $C_{12}$ hydrocarbon- based radical, preferably a saturated, linear, cyclic or branched $C_1$- $C_6$ alkyl radical, and Ar is a $C_6$- $C_{18}$ aryl radical; and tin derivatives corresponding to the following general formula (VI) : $(R_1)_{4-n} Sn (X)_n$ in which $R_1$, X and n have the meaning indicated above; esters; orthoesters; multiesters; and diisocyanates.

**21.** Process according to Claim 20, **characterized in that** the at least difunctional, non- polymerizable, electrophilic coupling agent is chosen from the compounds of formula (IV) : $Si (X)_n (Ri)_{4-n}$ in which X is a halogen atom, $R_1$, being identical or different, is a $C_1$- $C_{12}$ hydrocarbon- based radical, preferably a saturated, linear, cyclic or branched $C_1$- $C_6$ alkyl radical, n is an integer 2, 3 or 4, and advantageously dimethyldichlorosilane.

**22.** Process according to one of Claims 12 to 21, **characterized in that** the electrophilic reactant that is a precursor of functional groups is chosen from the functionalizing agents that are precursors of carboxylic acid, alcohol, silanol, alkoxysilane, organostannyl and amine functional groups and **in that** the acidic proton donor compound is methanol.

**23.** Process according to one of Claims 12 to 21, **characterized in that** the amount of the at least difunctional, non-polymerizable, electrophilic coupling agent is between 0.1 and 0.5 molar equivalent relative to the compound obtained in step (3).

**24.** Process according to Claim 12 or 22, **characterized in that** the amount of the proton donor compound or of the functionalizing agent is between 1 and 10 molar equivalents, preferably between 1 and 3.

**25.** Process according to one of Claims 12 to 24, **characterized in that** the process additionally comprises a step (5) that brings the polymer obtained at the end of step (4) into contact with an antioxidant.

**26.** Diene polymacromonomer obtained by reaction of the living diene polymacromonomer obtained at the end of step 2 of the process according to Claim 12, either with an electrophilic reactant that is a precursor of functional groups such as, especially, alcohol, carboxylic acid, amine, silanol, alkoxysilane or organostannyl functional groups, or with an acidic proton donor compound.

**27.** Rubber composition, that can be used for manufacturing tyres, based on at least: a block elastomer defined according to any one of Claims 3, 5 and 7 to 11 and a reinforcing filler.

**28.** Composition according to Claim 27, **characterized in that** the reinforcing filler is present in an amount between 20 and 200 phr, preferably between 30 and 150 phr (parts by weight per hundred of diene elastomer).

**29.** Composition according to either of Claims 27 and 28, the reinforcing filler mainly being an inorganic filler, preferably silica.

**30.** Composition according to either of Claims 27 and 28, the reinforcing filler mainly being an organic filler, preferably carbon black.

**31.** Composition according to any one of Claims 27 to 30, **characterized in that** it additionally comprises a vulcanization system.

**32.** Composition according to Claim 31, **characterized in that** it is in the vulcanized state.

**33.** Use of a composition according to any one of Claims 27 to 31, for manufacturing a finished article or a semi-finished product intended for a ground-contact system of a motor vehicle.

**34.** Use according to Claim 33, **characterized in that** the finished article is a tyre.

**35.** Use according to Claim 34, **characterized in that** the semi-finished products intended for tyres are chosen from the group composed of treads, underlayers, crown reinforcement plies, sidewalls, carcass reinforcement plies, beads and protectors.

**36.** Finished article or semi-finished product intended for a ground-contact system of a motor vehicle, comprising a composition according to any one of Claims 27 to 32.

**37.** Finished article according to Claim 36, consisting of a tyre.

**38.** Semi-finished product according to Claim 36, consisting of a semi-finished product for a tyre.

**39.** Semi-finished product according to Claim 38, chosen from the group composed of treads, underlayers for these treads, crown plies, sidewalls, carcass plies, beads and protectors.

Fig. 1

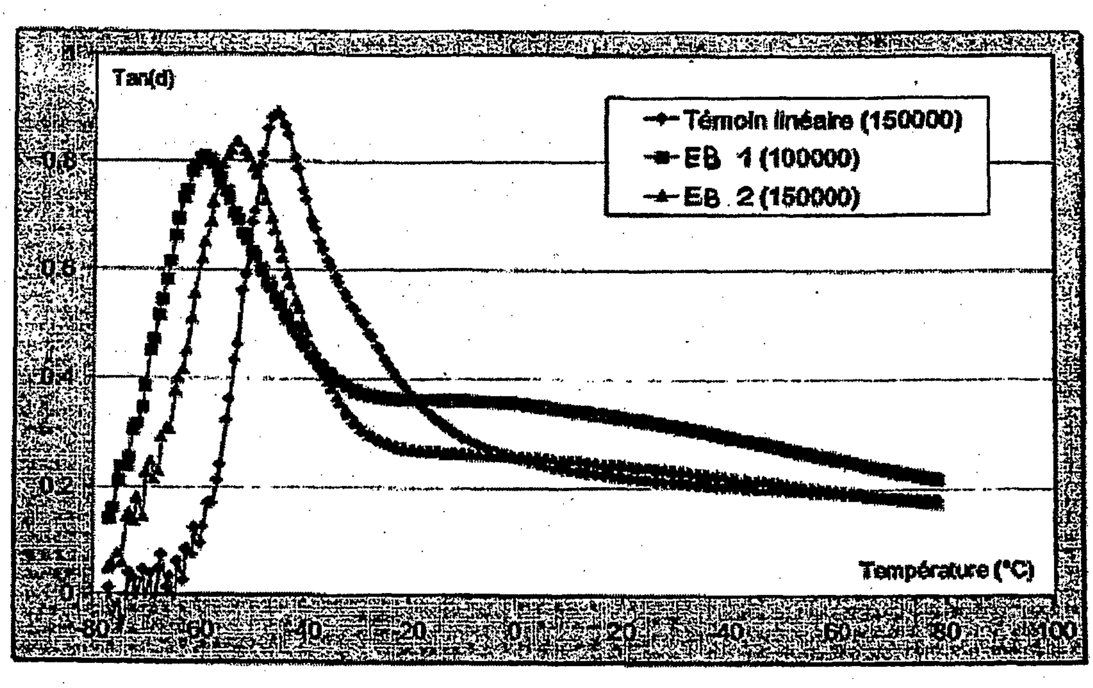
Tan(d)
Témoin linéaire (150000)
EB 1 (100000)
EB 2 (150000)
Température (°C)
0,8
0,6
0,4
0,2
0
-80
-60
-40
-20
0
20
40
60
80
100

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0216490 A2
- US 6506862 B2
- FR 2149339
- FR 2206330
- US 3842111 A
- US 3873489 A
- US 3978103 A
- US 3997581 A
- US 4002594 A
- US 4072701 A
- US 4129585 A
- US 5580919 A
- US 5583245 A
- US 5650457 A
- US 5663358 A
- US 5663395 A
- US 5663396 A
- US 5674932 A
- US 5675014 A
- US 5684171 A
- US 5684172 A
- US 5696197 A
- US 5708053 A
- US 5892085 A
- EP 1043357 A
- WO 0149782 A
- WO 0222728 A
- WO 0231041 A
- WO 02083782 A
- WO 0210269 A
- EP 0501227 A
- EP 0735088 A
- EP 0810258 A
- EP 0881252 A
- WO 9928376 A
- WO 0005300 A
- WO 0005301 A


### Littérature non-brevet citée dans la description


- **DE KNAUSS et al.** *Polym. Prep. ACS. Div. Poly. Chem.,* 1997, vol. 38 (1), 68-69
- *Polym. Prep. ACS. Div. Poly, Poly Chem.,* 2000, vol. 41 (2), 1397-1398
- *J. Poly. Sci. Polym. Chem.,* 2000, vol. 38, 4289-4298
- *J. Poly. Sci. Poly,* 2001, vol. 38, 3547-3555
- *Macromolécules,* 2002, vol. 35, 2055-2062
- Principles of Polymerization. John Wiley & Sons, 1991
- **ASAMI et al.** *Polym. Prepr. ACS, Div. Polym. Chem.,* 1998, vol. 29 (2), 19-20